# EUROPÄISCHE PATENTSCHRIFT

(11) **EP 2 933 613 B1**
(45) Veröffentlichungstag und Bekanntmachung des Hinweises auf die Patenterteilung: **01.08.2018**
(21) Anmeldenummer: 15158492.7
(22) Anmeldetag: 10.03.2015
(51) Int. Cl.: G01F 23/26, G01F 25/00, G01N 35/10

(54) **Verfahren und Vorrichtung zur automatisierten Klassifizierung einer Flüssigkeit sowie Verfahren und Vorrichtung zur automatisierten Anpassung von Voreinstellungen für eine kapazitive Flüssigniveaumessung**
Method and device for the automated classification of a fluid, and method and device for the automatic adaptation of presets for capacitive fluid level measurement
Procédé et dispositif destinés à la classification automatisée d'un liquide et procédé et dispositif d'adaptation automatisée de pré-réglages pour une mesure de niveau de fluide capacitif

(30) Priorität: 14.04.2014 CH 5702014
(43) Veröffentlichungstag der Anmeldung: 21.10.2015
(73) Patentinhaber: Tecan Trading AG, 8708 Männedorf (CH)
(72) Erfinder: Wiggli, Markus, 8632 Tann/ZH (CH); Cors, Nicolas, 8640 Rapperswil (CH)
(74) Vertreter: OK pat AG

(56) Entgegenhaltungen:
- EP-A1- 2 530 440
- WO-A2-2011/080199
- US-A1- 2012 024 055

## Beschreibung

Die Erfindung betrifft Verfahren zur automatisierten Klassifizierung einer Flüssigkeit in einer Vorrichtung, die dazu ausgelegt ist eine kapazitive Flüssigkeitsniveaumessung in einem Behälter vorzunehmen, der mit der Flüssigkeit befüllt ist. Die Erfindung betrifft auch entsprechende Vorrichtungen.

Die Erfindung betrifft auch Verfahren und Vorrichtungen zur automatisierten Anpassung von Voreinstellungen für eine kapazitive Flüssigniveaumessung, wobei vorzugsweise die Voreinstellungen anhand einer automatisierten Klassifizierung erfolgen.

### Hintergrund der Erfindung

Es gibt zahlreiche medizinische, biologische, chemische sowie pharmazeutische Geräte, bei denen es um die Handhabung und den Einsatz von Flüssigkeiten geht. So gibt es zum Beispiel automatisierte Flüssigkeitshandhabungssysteme, um medizinische, biologische, physikalische und chemische Untersuchungen durchzuführen oder um Prozesse in den entsprechenden technischen oder wissenschaftlichen Gebieten auszuführen.

Heutzutage sind die meisten der automatisierten Flüssigkeitshandhabungssysteme sogenannte computergesteuerte Handhabungssysteme.

Ein typisches computergesteuertes Handhabungssystem umfasst beispielsweise einen Arbeitsbereich (Arbeitstisch oder Oberfläche) für das Abstellen von Flüssigkeitsbehältern, einen motorisierten Pipettierroboter und eine Steuerung (meist eine prozessor-basierte Steuerung). Der Pipettierroboter umfasst mindestens eine Pipette zum Aspirieren und Dispensieren von flüssigen Proben. Durch den Einsatz eines Ablaufprogramms, das in der Steuerung ausgeführt wird, kann der Pipettierroboter an eine bestimmte Position bewegt werden, um dort eine spezifische Handlung auszuführen. So kann zum Beispiel eine Pipette in einen Behälter abgesenkt werden, um dort eine Flüssigkeit aufzusaugen oder eine Flüssigkeit abzugeben.

Moderne Handhabungssysteme umfassen typischerweise Mittel, die es ermöglichen das Flüssigkeitsniveau einer Flüssigkeit in einem Behälter des Handhabungssystems zu ermitteln. Die Ermittlung des Flüssigkeitsniveaus ist für eine Reihe von Verfahrensabläufen von grundlegender Bedeutung. Wenn man z.B. verhindern möchte, dass beim Aufsaugen von Flüssigkeit versehentlich Luft angesaugt wird, dann muss man zuvor sicherstellen, dass die Pipette ausreichend weit in die Flüssigkeit eintaucht. Um ein ausreichend weites Eintauchen in einem automatisierten Ablauf zu bewerkstelligen, muss das momentane Flüssigkeitsniveau der Flüssigkeit in dem Behälter ermittelt werden.

Es gibt auch zahlreiche andere Beispiele für Abläufe, bei denen das Flüssigkeitsniveau einer Flüssigkeit ermittelt werden muss.

Das Flüssigkeitsniveau einer Flüssigkeit in einem Behälter kann z.B. anhand einer kapazitiven Flüssigniveaumessung (auch cLLD für capacitive liquid level detection genannt) ermittelt werden. Da ein Gas und eine Flüssigkeit deutlich unterschiedliche Dielektrizitätskonstanten besitzen, kann die Gas-Flüssig-Phasengrenze über eine Kapazitätsänderung bestimmt werden.

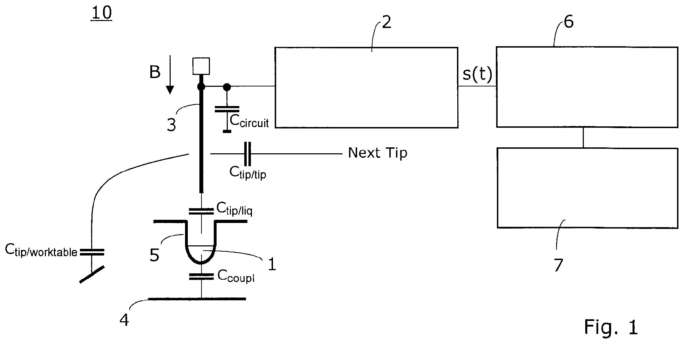

Das Detektieren einer Phasengrenze wird typischerweise auf kapazitivem Weg gemacht, wie anhand von Fig. 1 schematisch gezeigt. Fig. 1 zeigt den Aufbau eines bekannten Laborgeräts 10, das hier zum Detektieren eines Flüssigkeitsniveaus ausgelegt ist. Die Anwesenheit einer Flüssigkeit 1 in einem Behälter 5 oder die Phasengrenze zwischen Luft und Flüssigkeit 1 wird hier z.B. durch das Beobachten der Kapazitätsänderung von C_{tip/liq} und von der Serienkapazität C_{coupl} detektiert. Eine elektronische Lade-/Entlade-Schaltung 2 sorgt für ein abwechselndes Aufladen und Entladen, um die effektive Kapazität zwischen einem Sensor, z.B. in Form einer Pipettenspitze 3, und einer geerdeten Grundplatte 4 messen zu können. Die Signalverarbeitung kann mit einer Signalverarbeitungsschaltung 6 erfolgen, die z.B. von einem Controller 7 unterstützt wird.

Die effektive Kapazität, die sich je nach Laborgerät 10 ergibt aus den Streukapazitäten, elektrischen Einkopplungen durch den Sensor oder die Pipettenspitze 3, der Leitfähigkeit der Flüssigkeit 1 und dem Übersprechen zwischen benachbarten Messkanälen (in Fig. 1 Next Tip genannt), ist sehr klein. Sie liegt typischerweise im Bereich von wenigen Picofarad (pF). Die Kapazitätsänderung, die sich beim Eintauchen aus der Luft in eine Flüssigkeit ergibt, ist nochmals ca. um einen Faktor 100 bis 1000 kleiner.

Details zu einer Vorrichtung mit kapazitiver Flüssigniveaumessung sind zum Beispiel einer der publizierten Patentanmeldungen EP2530440A1 und WO2011080199A2 des vorliegenden Anmelders zu entnehmen.

In Handhabungssystemen mit kapazitiver Flüssigniveaumessung muss der Anwender eine Grundeinstellung vornehmen, damit die kapazitive Flüssigniveaumessung vom System zuverlässig und genau vorgenommen werden kann. Man spricht davon, dass manuell die korrekte Einstellung der Detektionsparameter vorgenommen werden muss, bevor dann erfolgreich eine kapazitive Flüssigniveaumessung durchgeführt werden kann.

Die Einstellung der Detektionsparameter hängt unter anderem von physikalischen Eigenschaften der Flüssigkeit ab, für die das Flüssigkeitsniveau ermittelt werden soll. Diese physikalischen Eigenschaften der zu untersuchenden oder messenden Flüssigkeit sind jedoch häufig nicht bekannt oder nur in Form von Schätzwerten bekannt. Es ist offensichtlich, dass eine falsche oder ungenaue Vorgabe der Detektionsparameter zu ungenauen oder gar falschen Detektionsergebnissen bei der Flüssigniveaumessung führen kann.

Es stellt sich nun die Aufgabe ein Verfahren bereitzustellen, das in einem Handhabungssystem das automatisierte Ermitteln und/oder das automatisierte Einstellen des/der Detektionsparameter ermöglicht.

Die Erfindung betrifft insbesondere die automatisierte Klassifizierung einer Flüssigkeit und/oder das Anwenden einer kapazitiven Flüssigkeitsniveaumessung cLLD unter Anwendung einer zuvor erfolgten Klassifizierung der Flüssigkeit.

Insbesondere soll ein Verfahren und eine Vorrichtung für das automatisierte Klassifizieren von Flüssigkeiten bereitgestellt werden.

Es soll auch ein Verfahren und eine Vorrichtung für das automatisierte Vorgeben einer Einstellung oder für das Einstellen einer Vorrichtung bereitgestellt werden, damit eine kapazitive Flüssigniveaumessung erfolgreich durchgeführt werden kann. Es soll auch eine entsprechend ausgestattete Vorrichtung bereitgestellt werden.

Gemäss Erfindung wird ein Verfahren zur automatisierten Klassifizierung von Flüssigkeiten in einer Vorrichtung bereitgestellt, wobei die Vorrichtung auch dazu ausgelegt ist eine kapazitive Flüssigkeitsniveaumessung in einem Behälter vorzunehmen, der mit einer Flüssigkeit befüllt ist.

Das Verfahren der Erfindung umfasst die folgenden Schritte:
- Bereitstellen der Flüssigkeit in einem Behälter,
- Durchführen einer kapazitiven Messung dieser Flüssigkeit
   o beim Ausführen einer Eintauchbewegung eines Sensors in die Flüssigkeit in dem Behälter hinein, oder
   o beim Ausführen einer Austauchbewegung des Sensors aus der Flüssigkeit in dem Behälter heraus,
   wobei ein Signal der kapazitiven Messung verarbeitet wird, um die automatisierte Klassifizierung der Flüssigkeit vorzunehmen.

Bei allen Ausführungsformen wird ein Signalsprung eines Signals der kapazitiven Messung verarbeitet, wobei der Signalsprung bei der Eintauchbewegung des Sensors in die Flüssigkeit hinein oder bei der Austauchbewegung des Sensors aus der Flüssigkeit heraus entsteht. Die automatisierte Klassifizierung der Flüssigkeit wird anhand einer Betrachtung oder Verarbeitung des Signalsprungs vorgenommen.

Bei allen Ausführungsformen wird ein flüssigkeitsspezifischer Schwellenwert auf dem Wege der kapazitiven Messung dieser Flüssigkeit beim Ausführen der Eintauchbewegung oder der Austauchbewegung ermittelt, wobei zum Ermitteln des Schwellenwerts ein Signal der kapazitiven Messung verarbeitet wird.

Der Schwellenwert steht bei allen Ausführungsformen in Bezug zu einem Sprung der Kapazität (Signalsprung), der beim Eintauchen oder Austauchen auftritt.

Vorzugsweise sind bei allen Ausführungsformen beim Ermitteln des Schwellenwertes einer oder mehrere der folgenden Angaben oder Parameter oder Faktoren festgelegt/vorgegeben/bekannt:
∘ der Typ des Behälters (Geometrie, Wandstärken, Material),
∘ das Flüssigkeitsvolumen der Flüssigkeit in dem Behälter,
∘ der Typ des Sensors (z. B. fixe Stahlkanüle, wegwerfbare Pipettenspitzen aus leitendem Kunststoff mit unterschiedlichen Nennvolumina),
∘ der Typ des Carriers, für den Behälter,
∘ der Typ des Arbeitstisches auf welchem der Carrier angeordnet ist.

Gemäss Erfindung wird eine automatische Klassifizierung oder Einteilung von Flüssigkeiten in Sensitivitätsbereiche (im Folgenden auch als Sensitivitätsklassen bezeichnet) vorgenommen, wobei dies unter Anwendung der kapazitiven Messung erfolgt. Dabei wird auf kapazitivem Wege
- mittels eines in eine Flüssigkeit hinein zustellbaren Sensors und/oder
- mittels eines aus einer Flüssigkeit herausbewegbaren Sensors die Klassifizierung/Gruppierung der Flüssigkeit vorgenommen. Diese Klassifizierung/Gruppierung erfolgt über die Ermittlung eines flüssigkeitsspezifischen Wertes, einer flüssigkeitsspezifischen Reihe von diskreten Werten oder einer Wertefunktion, der/die mit einem oder mehreren vorgegebenen Schwellenwerten oder Vergleichskriterien in Bezug gesetzt wird/werden. Durch das Inbezugsetzen mit einem oder mehreren vorgegebenen Schwellenwerten oder mit Vergleichskriterien wird dann die Einteilung der Flüssigkeit in eine von mehreren Sensitivitätsklassen oder Gruppen vorgenommen.

Gemäss Erfindung werden vorzugsweise mehrere Signalsprünge oder Intensitätswerte ermittelt und es wird aus den Signalsprüngen oder den Intensitätswerten ein Mittelwert gebildet.

Vorteilhafte Ausführungsformen sind den jeweiligen Unteransprüchen zu entnehmen.

Insbesondere geht um ein Verfahren zum Klassifizieren/Gruppieren von Flüssigkeiten in einer Vorrichtung, die eine kapazitiv arbeitende Messvorrichtung umfasst, die für die Detektion von Phasengrenzen (hier kapazitive Flüssigniveaumessung oder kurz cLLD genannt) ausgelegt ist.

Durch den Einsatz der Erfindung können Sensitivitätseinstellungen vorgegeben werden, die dazu eingesetzt werden, um eine nachfolgende kapazitive Flüssigkeitsniveaumessung (cLLD) schnell und zuverlässig vorzunehmen.

Bei allen Ausführungsformen geht es um das automatisierte Vorgeben von Schwellenwerten, die besonders vorzugsweise als adaptive Schwellenwerte vorgegeben werden.

Vorzugsweise korrelieren die Schwellenwerte bei allen Ausführungsformen mit der zu erwarteten Signalintensität beim Ein- und/oder Austauchen.

Vorzugsweise haben die Schwellenwerte bei allen Ausführungsformen eine Abhängigkeit von dem Flüssigkeitsvolumen, das mittels cLLD zu detektieren ist.

Besonders vorzugsweise haben die Schwellenwerte bei allen Ausführungsformen eine Abhängigkeit von der Grösse der Grenzfläche, die sich zwischen der zu messenden Flüssigkeit und dem Behälter ergibt, d.h. es ergibt sich eine Abhängigkeit von der sogenannten benetzten Fläche.

Vorzugsweise kann bei allen Ausführungsformen die Sensitivitätseinstellung dynamisch nachgeführt und/oder angepasst werden, wobei dies besonders vorzugsweise in Abhängigkeit von der benetzten Fläche geschieht.

Vorzugsweise werden bei allen Ausführungsformen zwei oder drei Sensitivitätsgruppen vorgegeben, wobei jede dieser Gruppen ihr eigenes spezifisches Sensitivitätsprofil als Funktion vom Flüssigkeitsvolumen und/oder der benetzten Fläche hat.

Besonders bevorzugt sind Ausführungsformen, bei denen jede der Sensitivitätsklassen ein eigenes spezifisches Schwellenwertprofil (angepasst an oder abgeleitet von dem Sensitivitätsprofil) aufweist.

Die Form (Geometrie) des Behälters sowie das zu detektierende Flüssigkeitsvolumen sind auch relevant. Daher ist vorzugsweise bei allen Ausführungsformen die Sensitivität abhängig von der Form (Geometrie) des Behälters, respektive der Wandfläche, die von der Flüssigkeit bedeckt wird (benetzten Fläche genannt).

Der/die Schwellenwert(e), die als flüssigkeitsspezifische Werte einer Flüssigkeit zugeordnet wurde/n, respektive die Klassifizierung oder Gruppierung einer Flüssigkeit, kann gemäss Erfindung beispielsweise in anderen Systemkonstellationen oder -konfigurationen angewendet werden, indem z.B. die Schwellenwerte umgerechnet werden, oder indem anhand einer Tabellenabfrage entsprechende Einträge aus einer Tabelle oder einem Speicher abgerufen werden. Dieses Prinzip lässt sich auf alle Ausführungsformen der Erfindung anwenden.

Der/die Schwellenwert(e), die als flüssigkeitsspezifische Werte einer Flüssigkeit zugeordnet wurde/n, respektive die Klassifizierung oder Gruppierung einer Flüssigkeit können im Zusammenhang mit anderer Labware verwendet werden. Dieses Prinzip lässt sich auf alle Ausführungsformen der Erfindung anwenden.

Bei bevorzugten Ausführungsformen der Erfindung werden eine oder mehrere der folgenden Aussagen/Regeln umgesetzt:
- Die Sensitivität ist keine Konstante;
- Die Sensitivität hängt mindestens vom zu detektierenden Flüssigkeitsvolumen und/oder der benetzten Fläche ab (eventuell auch von anderen Parametern);
- Vorzugsweise wird je nach Flüssigkeitsvolumen und/oder der benetzten Fläche eine andere Sensitivität oder Sensitivitätskurve vorgegeben;
- Vorzugsweise erfolgt die Einteilung in Sensitivitätsklassen nach der Intensität des Kapazitätssprungs beim Eintauchen oder Austauchen des Sensors;
- Anhand der Sensitivitätsklasse wird ein geeigneter Schwellenwert, eine geeignete Schwellenwertreihe oder eine geeignete Schwellenwertfunktion vorgegeben;
- Je nach Sensitivitätsklasse der Flüssigkeit (d.h. in Abhängigkeit von der Leitfähigkeit und Permittivität) wird eine andere Schwellenwertreihe oder eine andere Schwellenwertfunktion angewendet.

Das genaue Voreinstellen der Sensitivität für eine zu messende Flüssigkeit ist besonders wichtig, da kapazitive Flüssigkeitsniveaumessungen (cLLD) sehr empfindlich sind. Eine Fehleinstellung kann zu falschen oder sehr ungenauen Ergebnissen führen. Die Erfindung bietet eine höhere Zuverlässigkeit bei cLLD aufgrund der automatisierten Klassifizierung.

Für eine erfolgreiche kapazitive Flüssigkeitsniveaumessungen (cLLD) wird daher gemäss Erfindung, vorzugsweise bei allen Ausführungsformen, das Wählen oder Vorgeben einer geeigneten Sensitivitätseinstellung ermöglicht. Vorzugsweise erfolgt bei allen Ausführungsformen das Vorgeben einer geeigneten Sensitivitätseinstellung automatisch seitens der Vorrichtung.

Es ist ein Vorteil der Erfindung, dass der Anwender einer Vorrichtung sich nicht um Detailangaben der Flüssigkeiten bemühen muss, die zum Einsatz kommen sollen. Ausserdem muss er bei keiner der Ausführungsformen manuelle Eingaben vornehmen, da die Vorrichtung der Erfindung dazu ausgelegt ist, z.B. nach Aufruf einer entsprechenden Prozedur, eine oder mehrere Flüssigkeiten automatisch zu klassifizieren und/oder die Voreinstellung(en) für eine nachfolgende kapazitive Flüssigkeitsniveaumessungen (cLLD) vorzugeben.

Die Erfindung macht bei allen Ausführungsformen den Konfigurationsablauf und das Handling von solchen Vorrichtungen einfacher und weniger fehleranfällig.

Die Erfindung ermöglicht, je nach Umsetzung, ein intelligenteres Erkennen und Reagieren auf Fehler beim Ausführen einer kapazitiven Flüssigkeitsniveaumessung (cLLD).

Die Erfindung ermöglicht es, die mechanischen und physikalischen Grenzen heutiger Flüssigkeitshandhabungssysteme weiter voran zu treiben und bis zu kleinsten Volumina zu gehen.

Die kapazitive Flüssigkeitsniveaumessung (cLLD) der Erfindung funktioniert mit jeder gängigen Labware (Behälter), wie Mikroplatten mit Wells, Plastik- oder Glasröhrchen und Trögen.

Vorzugsweise kommen bei allen Ausführungsformen spezielle Carrier für das Aufnehmen oder Tragen der Labware (Behälter) zum Einsatz, die für eine kapazitive Flüssigkeitsniveaumessung (cLLD) optimiert sind. Ein solcher Carrier sollte eine oder mehrere der folgenden Kriterien erfüllen:
- Die Carrierwände sind nicht-leitend ausgelegt;
- Der Carrierboden ist leitend ausgelegt und geerdet (zum Beispiel zusammen mit dem Arbeitstisch);
- Der Carrierboden ist so ausgelegt, dass er sich nahe an der Flüssigkeit befindet.

Die Erfindung führt vorzugsweise bei allen Ausführungsformen eine kapazitive Flüssigkeitsniveaumessung (cLLD) mit Auswertung eines schnellen und eines langsamen Signals durch, wobei unterschiedliche Schwellenwerte zum Auswerten des schnellen und für des langsamen Signals zum Einsatz kommen. Dabei hat mindestens einer der beiden Schwellenwerte (vorzugsweise beide Schwellenwerte) eine Abhängigkeit von dem Flüssigkeitsvolumen, das zu detektieren ist, und/oder eine Abhängigkeit von der momentan durch die zu messende Flüssigkeit benetzten Fläche.

Die physikalischen Eigenschaften einer Flüssigkeit müssen bei keiner Ausführungsform der Erfindung bekannt sein.

Die Erfindung bietet bei allen Ausführungsformen eine höhere Zuverlässigkeit der kapazitiven Flüssigkeitsniveaumessung (cLLD) aufgrund der zuvor gemäss Erfindung erfolgten automatisierten Klassifizierung.

Die Erfindung ermöglicht ein intelligenteres Erkennen und Reagieren auf Fehler.

Mit der Erfindung ist es möglich kleinere Volumina im Rahmen der kapazitiven Flüssigkeitsniveaumessung (cLLD) zu detektieren als zuvor (z.B. bis zu ca. 2 µl Leitungswasser in einem Well mit V-förmigem Boden einer 384er-Mikroplatte).

Mit der Erfindung ist es auch möglich kleinere Volumina im Rahmen der kapazitiven Flüssigkeitsniveaumessung (cLLD) von schlecht leitenden Flüssigkeiten zu detektieren (z.B. bis zu ca. 30 µl Ethanol in einem Well mit V-förmigem Boden einer 384er-Mikroplatte).

Bei allen Ausführungsformen reicht in den meisten Fällen eine einzige cLLD-Detektion aus, d.h. man muss eine Messung nicht wiederholen. Dies gilt vor allem dann, wenn man, wie erwähnt, bei der kapazitiven Flüssigkeitsniveaumessung (cLLD) mit einem schnellen und einem langsamen Signal arbeitet.

Die erfindungsgemäßen Handhabungssysteme (Vorrichtungen) und die erfindungsgemäßen Verfahren werden nun an Hand von schematischen, den Umfang der Erfindung nicht beschränkenden Zeichnungen von beispielhaften Ausführungsformen im Detail erläutert.
- Fig. 1: zeigt eine schematische Ansicht eines Laborgeräts gemäß Stand der Technik;
- Fig. 2: zeigt eine schematisierte Grafik mit den Ergebnissen erfindungsgemässer Messungen von vier unterschiedlichen Flüssigkeiten in einem Eppendorf Tube®;
- Fig. 3: zeigt ein schematisiertes Flussdiagramm eines ersten beispielhaften Verfahrens der Erfindung;
- Fig. 4A: zeigt eine schematische Ansicht einer ersten Vorrichtung gemäß Erfindung, die einerseits zum Durchführen einer kapazitiven Messung und Klassifizierung einer Flüssigkeit und andererseits zum Durchführen einer kapazitiven Flüssigkeitsniveaumessung (cLLD) ausgelegt ist;
- Fig. 4B: zeigt eine schematische Ansicht eines Teils einer weiteren Vorrichtung gemäß Erfindung, die einen geerdeten Arbeitstisch umfasst, auf dem ein Carrier mit 8 Röhrchen angeordnet ist;
- Fig. 4C: zeigt eine perspektivische Ansicht eines beispielhaften Carriers, der hier mit 12 Röhrchen bestückt ist;
- Fig. 5: zeigt ein schematisches Intensitäts-Zeit-Diagramm in dem zwei erfindungsgemäße Signale einer kapazitiven Flüssigkeitsniveaumessung (cLLD) in vereinfachter Form dargestellt sind, um die Anwendung von zwei unterschiedlichen Schellenwerten (und eventuell anderen Kriterien) gemäss einer weiteren Ausführungsform beschreiben zu können;
- Fig. 6A: zeigt eine schematische Ansicht dreier identischer Behälter, die jeweils mit unterschiedlichen Flüssigkeitsvolumen befüllt sind;
- Fig. 6B: zeigt ein schematisches Diagramm, das in Bezug gesetzt ist zu den drei Füllstandssituationen, die in Fig. 6A gezeigt sind, wobei einerseits die Signalintensität beim Austauchen des Fühlers aus einer leitfähigen Flüssigkeit und andererseits geeignete Schwellenwerte dargestellt sind;
- Fig. 7: zeigt ein schematisches Diagramm, das eine Reihe von diskreten Schwellenwerten zeigt, die für das Durchführen einer kapazitiven Flüssigkeitsniveaumessung (cLLD) geeignet sind, die ein erstes schnelleres und ein zweites langsameres Signal auswertet;
- Fig. 8A: zeigt ein stark schematisiertes Diagramm, das in Bezug gesetzt ist zu einem links gezeigten Behälter, wobei in dem Diagramm für jede von drei Flüssigkeitsklassen eine Kurve vorgegeben ist;
- Fig. 8B: zeigt ein stark schematisiertes Diagramm, das in Bezug gesetzt ist zu einem links gezeigten Behälter, wobei in dem Diagramm für jede von drei Flüssigkeitsklassen eine Kurve vorgegeben ist.

Im Folgenden werden beispielhafte Flüssigkeitshandhabungssysteme 100 beschrieben, wobei sich die Erfindung jedoch problemlos auch auf andere Handhabungssysteme, Laborsysteme, medizinische und pharmazeutische Systeme und dergleichen anwenden lässt. Diese Systeme werden hier gesamthaft als Vorrichtungen 100 bezeichnet.

Der Begriff Behälter 101 (auch Labware genannt) umfasst unter anderem folgende Behälter: Mikroplatten mit Wells, Tröge, Röhrchen (aus Glas oder Kunststoff), Container, Flaschen, Kolben und dergleichen.

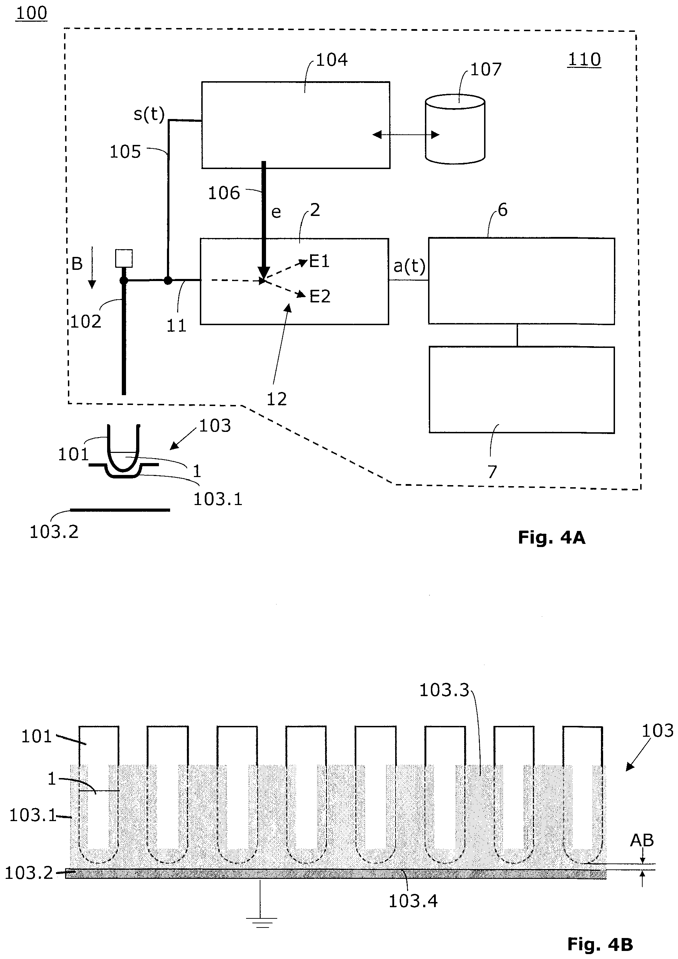

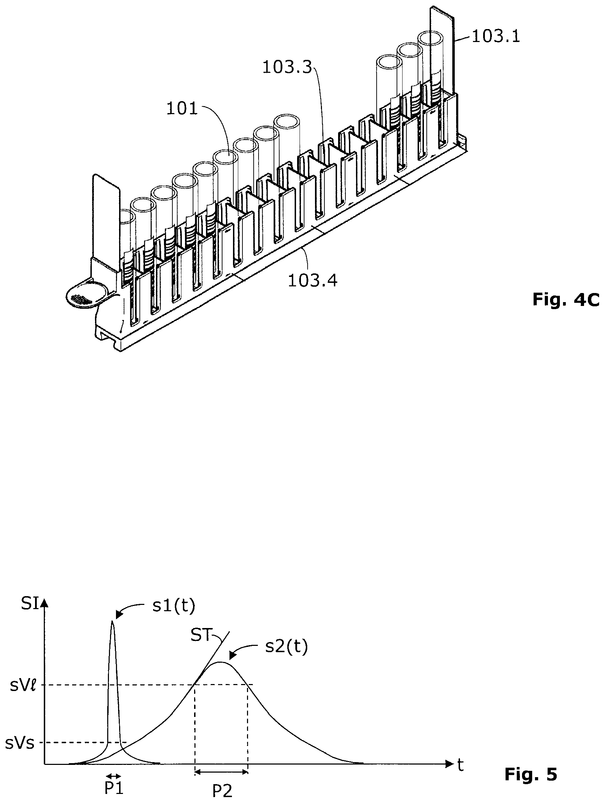

Ausserdem ist jedem Behälter 101 ein Träger 103.1 (hier auch Carrier 103.1 genannt) zugeordnet, auf dem oder in dem der Behälter 101 angeordnet sein kann, wie in den Figuren 4A, 4B und 4C in schematisierter Form anhand mehrerer Beispiele gezeigt ist.

Wenn im Folgenden von einem Typ des Sensors 102, einem Typ des Behälters 101, einem Typ des Carriers 103.1, oder einem Typ des Arbeitstisches 103.2 die Rede ist, dann soll das Wort "Typ" die Geometrie und das Material umfassen.

Der Carrier 103.1 befindet sich oberhalb eines Arbeitstisches 103.2 oder einer anderen geeigneten Oberfläche, wie man beispielsweise in Fig. 4B erkennen kann.

Der Arbeitstisch 103.2 zusammen mit dem Carrier 103.1 wird hier als Behälterumgebung 103 bezeichnet.

Um eine zuverlässige und wiederholbar genaue Ermittlung des Flüssigkeitsniveaus mittels kapazitiver Flüssigkeitsniveaumessung cLLD zu ermöglichen, werden die zu messenden Flüssigkeiten 1 in verschiedene Sensitivitätsgruppen oder -klassen eingeteilt. Dieser Vorgang wird hier auch als Klassifizierung (oder Gruppierung) einer Flüssigkeit 1 bezeichnet. Diese Klassifizierung erfolgt bei allen Ausführungsformen anhand der direkten oder indirekten Messung der Leitfähigkeit und effektiven statischen Permittivität der jeweiligen Flüssigkeit 1.

Untersuchungen haben ergeben, dass im Rahmen der Erfindung keine absolute Messung oder Ermittlung der Leitfähigkeit und der Permittivität erforderlich sind. Es reicht für alle Ausführungsform eine qualitative Beurteilung der Flüssigkeiten 1.

Die Leitfähigkeit und Permittivität sind spezifische Materialeigenschaften, die hier durch einen zusammenfassend (integrierend) arbeitenden kapazitiven Messvorgang (kapazitive Messung genannt) indirekt zum Klassifizieren von Flüssigkeiten 1 eingesetzt werden.

Die Permittivität von Materie, hier von einer Flüssigkeit 1, (meist als ε angegeben) bezeichnet die dielektrische Leitfähigkeit der Materie. Die Einheit ist typischerweise As/Vm. Die Permittivität ist frequenzabhängig. Sie ist beispielsweise bei Wasser sehr stark ausgeprägt.

Die Permittivität kann man auch als ein Produkt der frequenzabhängigen Permittivität ε(ω) (auch relative Dielektrizitätskonstante genannt) und der Feldkonstanten ε₀ (Dielektrizitätskonstante des Vakuums) darstellen.

Die spezifische Größe Leitfähigkeit ist bei vorgegebener Geometrie einer Messanordnung über die Admittanz Y mit der komplexen frequenzabhängigen Impedanz verknüpft. Die Leitfähigkeit kann daher in einer Vorrichtung 100 der Erfindung messtechnisch direkt erfasst werden.

Als Einheit für die Leitfähigkeit wird "Siemens/µm" (S/µm) verwendet. Beispiel: hoch reines Wasser hat 0,05 µS/cm bis 0,1 µS/cm und Leitungswasser hat 300 µS/cm bis 1 mS/cm.

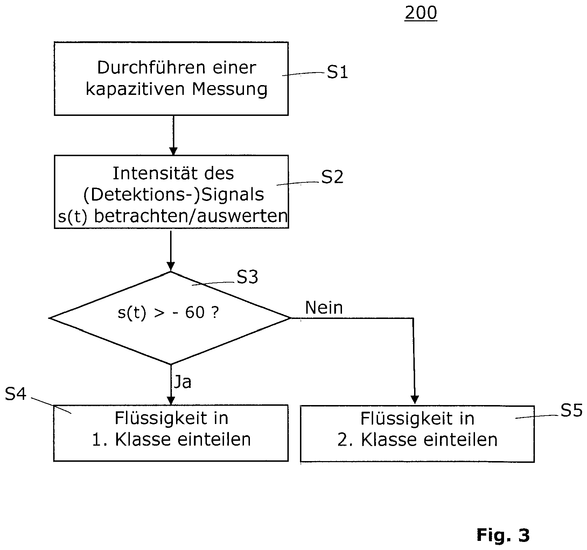

Bei allen Ausführungsformern wird eine kapazitive Messung durchgeführt (siehe Schritt S1 in Fig. 3), um dann die Flüssigkeit 1 in Bezug zu setzen oder zu vergleichen mit vorgegebenen (z.B. mit zuvor ermittelten) Vergleichsgrössen, die z.B. aus einem Speicher 107 bereitgestellt werden können (siehe Fig. 4A).

Die Klassifizierung erfolgt bei allen Ausführungsform mittels einer kapazitiven Messung (siehe Schritt S1 in Fig. 3). Vorzugsweise wird diese kapazitive Messung beim Eintauchen oder Austauchen eines Sensors 102 durchgeführt. Es kann aber auch eine kapazitive Messung durchgeführt werden, während sich der Sensor 102 in der Flüssigkeit 1 befindet. In letzterem Fall wird eine absolute Messung durchgeführt, um die Flüssigkeit 1 klassifizieren zu können.

Im Rahmen der Erfindung kommt bei allen Ausführungsformen zum Ermitteln der Sensitivitätsgruppe oder -klasse, respektive zum Klassifizieren von Flüssigkeiten 1 dasselbe kapazitive Flüssigkeitsniveaumesssystem 110 zum Einsatz, das auch später zum Detektieren des Flüssigkeitsniveaus eingesetzt wird.

Man nutzt also vorzugsweise bei allen Vorrichtungen 100 ein und dasselbe Flüssigkeitsniveaumesssystem 110 sowohl zum Klassifizieren von Flüssigkeiten 1 als auch zum Detektieren des Flüssigkeitsniveaus. Dies hat den Vorteil, dass die Ergebnisse des automatisierten Klassifizierens problemlos übertragbar und anwendbar sind auf das kapazitive Flüssigkeitsniveaumessen.

Bei allen Ausführungsformen kommt ein spezielles Klassifizierungsmodul 104 zum Einsatz, das über eine schaltungstechnische Verbindung oder Verknüpfung 106 eine Beeinflussung oder Verstellung der (Mess-)Empfindlichkeit einer Lade-/Entlade-Schaltung 2 und/oder einer Signalverarbeitungsschaltung 6 ermöglicht, wie in Fig. 4A angedeutet.

Je nach Ausführungsform kann das Klassifizierungsmodul 104 den Schaltungen 2 und/oder 6 entsprechende Schwellenwerte, Schwellenwertreihen oder eine Schwellenwertfunktion sV(FV) oder sV(bO) vorgeben, oder es kann z.B. mittels eines Signals oder einer Grösse e das Vorgeben eines Schwellenwertes, einer Schwellenwertreihe oder einer Schwellenwertfunktion sV(FV) oder sV(bO) auslösen.

Die Funktions- oder Baugruppen der Fig. 4A können teilweise oder alle zusammen auch in einer Schaltung zusammengefasst sein, wobei eine solche Schaltung vorzugsweise eine prozessorgesteuerte Schaltung ist, die mindestens einen Prozessor umfasst, der Weisungen/Befehle aus einem Speicher abarbeitet.

In diesem Fall und in anderen Ausführungsformen, die einen Prozessor umfassen, ist hier von einer prozessor-basierten Implementierung die Rede. Eine solche Implementierung umfasst eine Kombination aus Hardware und Software.

Im Rahmen der Erfindung werden bei allen Ausführungsformen auf kapazitivem Wege frequenzabhängige Leitungsvorgänge in dem zu untersuchenden Flüssigkeitssystem gemessen. Dieser Vorgang wird hier als kapazitive Messung bezeichnet (Schritt S1 in Fig. 3). Gegenüber einer Widerstandsmessung der Flüssigkeit 1 mit einem Gleichstrom, ergibt die kapazitive Messung der Impedanz eine wesentlich aussagekräftigere komplexe Größe Z oder den Sprung einer komplexen Größe Z. Daher basieren die Ausführungsformen der Erfindung auf einer kapazitiven Messung, die eine Wechselspannung (AC-Spannung) einsetzt. Diese Wechselspannung kann bei allen Ausführungsformen der Erfindung z.B. durch eine Lade-/Entlade-Schaltung 2 bereitgestellt und am Sensor 102 angelegt werden. Der Sensor 102 wird dabei mit einem kleinen Potential aufgeladen. Beim Ein- oder Austauchen in oder aus der Flüssigkeit 1 heraus, ergibt sich dann eine sprunghafte Veränderung der Kapazität, die gemessen oder ausgewertet werden kann (z.B. durch die Schaltung 104 oder 6).

Beim Durchführen der kapazitiven Messung erfolgt das Messen oder Auswerten z.B. durch das Klassifizierungsmodul 104. Beim Durchführen der kapazitiven Flüssigniveaumessung erfolgt das Messen oder Auswerten z.B. durch Signalverarbeitungsschaltung 6. Beides kann aber auch in einem gemeinsamen Schaltungsmodul erfolgen.

Eine ideale Sensorgeometrie zur Charakterisierung der Stoffeigenschaften einer Flüssigkeit 1 weist ein homogenes elektrisches Feld in der zu untersuchenden Flüssigkeit 1 bei vernachlässigbaren Randeffekten und Streufeldkapazitäten auf. Diese Forderung wird nur von zwei planparallelen Elektrodenplatten unendlicher Ausdehnung erfüllt, zwischen denen die Flüssigkeit 1 angeordnet ist. In einer realen Vorrichtung 100 ist das Umfeld deutlich anders. Untersuchungen haben ergeben, dass mittels eines linear zustellbaren Sensors 102 in dem realen Umfeld eines Behälters 101 im Rahmen einer kapazitiven Messung ausreichend genaue Ermittlungen vorgenommen werden können, um eine Klassifizierung zu ermöglichen. Vor allem hat sich gezeigt, dass solche kapazitiven Messungen ausreichend sind, um die zu untersuchenden Flüssigkeiten 1 in eine von mehreren (vorzugsweise drei) Sensitivitätsgruppen oder -klassen einzuteilen.

Flüssigkeiten weisen im Vergleich zu Dielektrika in fester Phase ein sehr komplexes Verhalten auf. In der flüssigen Phase können in Abhängigkeit von Frequenz und Amplitude eines einwirkenden elektrischen Wechselfeldes und der Temperatur unterschiedliche Ladungstransportprozesse sowie reversible und irreversible elektrochemische Reaktionen auftreten. Daher wird im Rahmen der Erfindung für die kapazitive Messung ein Frequenzband von 200 kHz bis 500 kHz und vorzugsweise von 250 kHz bis 350 kHz gewählt, um möglichst elektrochemische Reaktionen in der zu untersuchenden Flüssigkeit 1 zu vermeiden.

Bei allen Ausführungsformen wird beim automatisierten Klassifizieren mit dem gleichen Frequenzband gearbeitet wie beim kapazitiven Flüssigniveaumessen cLLD. Daher kann man bei beiden Vorgängen vorzugsweise dieselbe Schaltung 2 einsetzen.

Die Amplitude der an den Sensor 102 anzulegenden Wechselspannung (AC-Spannung) ergibt sich aus der Forderung nach einem geeignet großen Signal-Rausch-Abstand. Die angelegte Wechselspannung hat vorzugsweise bei allen Ausführungsformen der Erfindung, je nach der eingesetzten Sensorgeometrie, eine Ladekurve, die bei ca. 5V endet.

Vorzugsweise wird bei allen Ausführungsformen beim automatisierten Klassifizieren mit der gleichen Amplitude gearbeitet wie beim kapazitiven Flüssigniveaumessen. Daher kann man bei beiden Vorgängen vorzugsweise dieselbe Schaltung 2 einsetzen.

Vorzugsweise wird bei allen Ausführungsformen beim automatisierten Klassifizieren mit demselben Gleichspannungsanteil (Polarisationspannung) gearbeitet wie beim kapazitiven Flüssigniveaumessen. Der Gleichspannungsanteil (Polarisationspannung) beträgt vorzugsweise ca. 3V.

Die Vorgehensweise beim Ermitteln der Sensitivitätsgruppe oder - klasse, respektive beim Klassifizieren einer Flüssigkeit 1, umfasst vorzugsweise die folgenden Schritte:
- Bereitstellen eines (definierten) Flüssigkeitsvolumens FV der zu klassifizierenden Flüssigkeit 1. Dies geschieht bei allen Ausführungsformen in einem definierten Behälter 101, d.h. in einem Behälter 101 von zuvor festgelegtem Typ.
- Ein (definierter) Sensor 102, vorzugsweise ein Sensor 102 von zuvor festgelegtem Typ, wird in das (definierte) Flüssigkeitsvolumen FV dieser Flüssigkeit 1 zugestellt (Eintauchbewegung genannt) und es wird (dabei) mit einer zuvor geeignet angepassten Sensitivität oder mit der maximalen Empfindlichkeit eine kapazitive Messung der Flüssigkeit 1 vorgenommen. Dabei kommt vorzugsweise bei allen Ausführungsformen eine definierte Messumgebung zum Einsatz. Eine solche definierte Messumgebung umfasst vorzugsweise mindestens einen definierten Behälter 101 (hier auch als dedizierter Behälter bezeichnet) und einen definierten Carrier 103.1.
- Anhand eines (Detektions-)Signals s(t), das bei der kapazitiven Messung der Flüssigkeit 1 durch den Sensor 102 bereitgestellt wird, wird die Flüssigkeit 1 in eine von mehreren Sensitivitätsgruppen oder -klassen eingeteilt. Alle Ausführungsformen verwenden einen Signalsprung des (Detektions-)Signals s(t), respektive die Intensität des (Detektions-)Signals s(t) der kapazitiven Messung, um die Einteilung in eine Sensitivitätsgruppe oder -klasse vorzunehmen. Vorzugsweise erfolgt die Einteilung in eine Sensitivitätsklasse bei allen Ausführungsformen indem die Intensität des (Detektions-)Signals s(t) mit mindestens einem vordefinierten Schwellenwert in Bezug gesetzt wird. Falls die Intensität des (Detektions-)Signals s(t) oberhalb des vordefinierten Schwellenwerts liegt, wird diese Flüssigkeit in eine erste Sensitivitätsklasse eingeteilt (Schritt S4 in Fig. 3). Falls die Intensität des (Detektions-)Signals s(t) unterhalb des vordefinierten Schwellenwerts liegt, wird diese Flüssigkeit in eine zweite Sensitivitätsklasse eingeteilt (Schritt S5 in Fig. 3).
- Die so erfolgte Einteilung der Flüssigkeit 1 in eine bestimmte Sensitivitätsgruppe oder -klasse wird anschliessend (sofort oder später) bei einer kapazitiven Flüssigkeitsniveaumessung cLLD verwendet, um für diese Flüssigkeitsniveaumessung die geeignete Sensitivitäts(vor)einstellung vorzugeben.

Die kapazitive Messung der Flüssigkeit 1 erfolgt vorzugsweise bei allen Ausführungsformen, indem die Vorrichtung 100 die kapazitive Messung mit der höchsten Empfindlichkeit durchführt. Anhand der mit höchster Empfindlichkeit gemessenen Signalintensität und der vordefinierten Schwellenwerte wird die Flüssigkeit in eine von mehreren Sensitivitätsgruppen oder -klassen eingeteilt.

Vorzugsweise wird die kapazitive Messung der Flüssigkeit 1 nacheinander im selben Röhrchen 101 mit z.B. allen acht Sensoren eines Laborgerätes 100 mit Pipettenspitzen des gleichen Typs 102 versehen durchgeführt. (z.B. kann acht Mal ein 200er disposable Tip 102 zum Einsatz kommen). Die erste der acht Messungen wird vorzugsweise verworfen, da sie häufig durch elektrostatische Effekte verfälscht wird. Aus den restlichen sieben Messungen wird vorzugsweise bei allen Ausführungsformen der Median der Messsignale ermittelt und die Klassifizierung wird aufgrund dieses Medians vorgenommen.

In Fig. 4A ist dargestellt, dass ein Klassifizierungsmodul 104 schaltungstechnisch mit der Lade-/Entlade-Schaltung 2 verbunden ist, um das automatisierte Klassifizieren mit dem Durchführen der kapazitiven Flüssigkeitsniveaumessung in Verbindung zu setzen.

Das Klassifizierungsmodul 104 kann bei allen Ausführungsformen schaltungstechnisch aber auch nur mit der Signalverarbeitungsschaltung 6 oder mit beiden Schaltungen 2 und 6 verbunden sein.

Gemäss Erfindung ermöglicht die Einteilung einer Flüssigkeit 1 in eine bestimmte Sensitivitätsgruppe oder -klasse eine kapazitive Flüssigkeitsniveaumessung cLLD auch in einem anderen Umfeld (z.B. in einem anderen Behälter 101 oder in einer anderen Plattform oder Vorrichtung 100).

Anhand der spezifischen Sensitivitätsgruppe oder -klasse kann eine rechnerische Anpassung an ein anderes Flüssigkeitsvolumen FV und/oder an eine andere benetzte Fläche und/oder an einen anderen Behälter 101 und/oder an einen anderen Carrier 103.1 und/oder an einen anderen Arbeitstisch 103.2 und/oder an eine andere Pipettenspitze 102 erfolgen. In diesem Fall umfasst die Vorrichtung 100 ein Modul oder die Vorrichtung 100 ist mit einem Modul verbindbar, das eine rechnerische Anpassung vornimmt, bevor dann eine der beiden Schaltungen 2, 6 oder beide Schaltungen 2, 6 entsprechend für eine Flüssigkeitsniveaumessung cLLD eingestellt oder umgestellt werden.

Vorzugsweise sind alle Ausführungsformen so ausgelegt, dass sie dazu in der Lage sind Flüssigkeiten 1 zu kennzeichnen oder auszuscheiden, die für eine kapazitive Flüssigkeitsniveaumessung in der Vorrichtung 100 nicht geeignet sind. Das Kennzeichnen oder Ausscheiden kann z.B. erfolgen, falls die kapazitive Messung einer Flüssigkeit 1 ein (Detektions-)Signal s(t) ergibt, das keine Klassifizierung zulässt, weil es z.B. unterhalb eines Mindestwertes (unterer Schwellenwert) liegt.

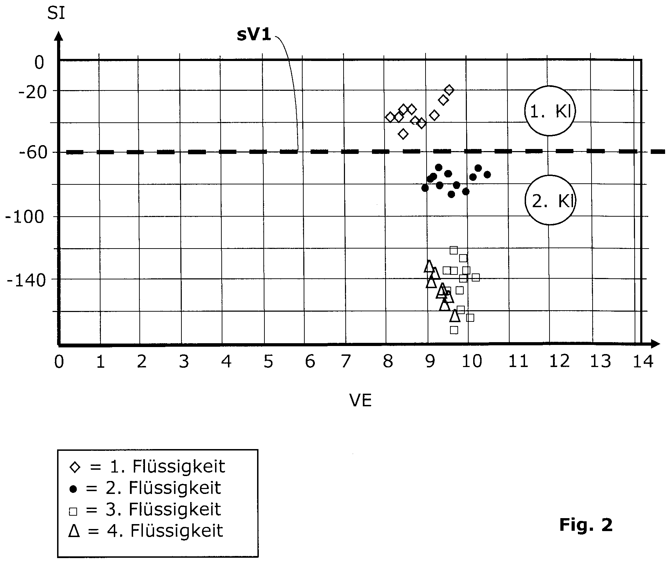

Die Fig. 2 zeigt eine grafische Darstellung von Messungen, die mit vier unterschiedlichen Flüssigkeiten in einer Vorrichtung 100 der Erfindung durchgeführt wurden. Jeder der vier Flüssigkeiten ist ein anderes grafisches Symbol zugeordnet, wie in der Legende zu Fig. 2 dargestellt. Bei der 1. Flüssigkeit handelt es sich hier um EtOH (Ethanol), bei der 2. Flüssigkeit um DiWater (destilliertes und de-ionisiertes Wasser), bei der 3. Flüssigkeit um Leitungswasser und bei der 4. Flüssigkeit um 3-molares NaCl (Natriumchlorid).

Fig. 2 lässt erkennen, dass sich die Flüssigkeiten 1. und 2. deutlich unterscheiden lassen, wenn man die (Signal-)Intensität SI des (Detektions-) Signals s(t) betrachtet. Die 3. und 4. Flüssigkeiten lassen sich weniger klar durch eine Betrachtung der Intensität SI unterscheiden, wobei sich diese Flüssigkeiten 3. und 4. jeweils wiederum deutlich von den Flüssigkeiten 1. und 2. unterscheiden lassen. Auf der x-Achse sind hier sogenannte Volumeneinheiten VE aufgetragen (z.B. in 10 µl-Schritten).

In Fig. 3 ist eine schematische Darstellung eines bevorzugten Verfahrens 200 der Erfindung gezeigt. Das Verfahren 200 teilt sich im gezeigten Ausführungsbeispiel in fünf Schritte, die mit S1 bis S5 gekennzeichnet sind.

Im ersten Schritt S1 wird eine kapazitive Messung einer Flüssigkeit 1 vorgenommen. Diese kapazitive Messung kann beim Ausführen einer Eintauchbewegung des Sensors 102 in die Flüssigkeit 1 hinein oder beim Ausführen einer Austauchbewegung des Sensors 102 aus der Flüssigkeit 1 heraus durchgeführt werden. Die kapazitive Messung liefert ein (Detektions-) Signal s(t), das bei allen Ausführungsformen durch ein separates oder integriertes Klassifizierungsmodul 104 (siehe Fig. 4A) verarbeitet wird.

Bei allen Ausführungsformen wird im Rahmen des Schrittes S2 ein Signalsprung eines Signal s(t) der kapazitiven Messung verarbeitet oder betrachtet, der bei der Eintauchbewegung des Sensors 102 in die Flüssigkeit 1 hinein oder bei der Austauchbewegung des Sensors 102 aus der Flüssigkeit 1 heraus entsteht, um die automatisierte Klassifizierung der Flüssigkeit 1 vorzunehmen.

Im zweiten Schritt S2 wird z.B. die Intensität (Signalstärke) des (Detektions-)Signals s(t) im Bereich des Signalsprungs betrachtet/ermittelt und im Schritt S3 erfolgt eine Klassifizierung oder Gruppierung anhand eines vordefinierten Schwellenwerts (z.B. sV1), der hier im gezeigten Beispiel bei -60 liegt. In der Darstellung von Fig. 2 wurde bewusst keine Einheit für die Intensität SI vorgegeben, da diese Einheit von der konkreten schaltungstechnischen Implementierung abhängt. Bei einer analogen schaltungstechnischen Anordnung kann die Signalintensität SI z.B. in mV angegeben werden. Bei einer digitalen schaltungstechnischen Anordnung kann die Signalintensität SI z.B. in ADU angegeben werden. ADU steht für analoge-digitale Umsetzung und bezeichnet die Anzahl der Quantifizierungsschritte, die beim Quantifizieren des analogen (Detektions-)Signals s(t) zur Anwendung kamen.

In Fig. 2 liegt die Punktewolke der 1. Flüssigkeit im Bereich zwischen -50 und - 18, wohingegen die Punktewolke der 2. Flüssigkeit im Bereich zwischen -90 und - 70 liegt. Es wurde ein Schwellenwert sV1 bei -60 vorgegeben. Dieser Schwellenwert (z.B. sV1) wird im Schritt S3 abgefragt. Liegt die gemessene Intensität des (Detektions-)Signals s(t) oberhalb von -60, so wird die entsprechende Flüssigkeit in eine 1. Sensitivitätsklasse (1. KI genannt) eingeteilt. Ansonsten wird die Flüssigkeit in eine 2. Sensitivitätsklasse (2. KI genannt) eingeteilt. Ein weiterer Schwellenwert könnte z.B. bei -100 festgelegt werden. Man könnte nun z.B. dem Schritt S3 einen weiteren Schritt anfügen, der prüft, ob die gemessene Intensität des (Detektions-)Signals s(t) kleiner ist als-100. Wenn dies der Fall ist, dann kann z.B. festgestellt werden, dass diese Flüssigkeit nicht geeignet ist für eine kapazitive Flüssigniveaudetektierung in der Vorrichtung 100.

Genaue Untersuchungen zeigen, dass es verschiedene Faktoren geben kann, die einen Einfluss auf die Klassifizierung der Flüssigkeiten haben. Falls solche Einflüsse vorhanden sind, werden diese gemäss Erfindung beim Vornehmen der Messungen und/oder beim Auswerten der Messungen berücksichtigt. Unter anderem können folgende (Umgebungs-)Einflüsse eine Rolle spielen:
- das Flüssigkeitsvolumen FV der Flüssigkeit 1 in dem Behälter 101,
- Typ des Behälters 101 (Material und Geometrie),
- Typ des Sensors 102 (Material und Geometrie),
- Typ des Carriers 103.1 (Material und Geometrie),
- Typ des Arbeitstisches 103.2 (Material und Geometrie).

Aus dem momentanen Flüssigkeitsvolumen FV der Flüssigkeit 1 in dem Behälter 101 und aus der Geometrie des Behälters 101 kann jeweils die momentan benetzte Oberfläche ermittelt werden, falls erforderlich. Bzw. umgekehrt kann die Sensitivität eine Abhängigkeit von einer Kurve oder Wertereihe aufweisen, die mit der benetzten Oberfläche in Bezug gesetzt ist, d.h. in einem solchen Fall besteht eine Abhängigkeit des Schwellenwerts sV(bO) von der benetzten Oberfläche.

Außerdem spielt die Beschaltung z.B. des Carriers 103.1 und des Arbeitstisches 103.2 eine Rolle. Sie können beide z.B. durch Erdung auf demselben Potential liegen, was vorteilhaft ist. In Fig. 4B ist ein schematisches Beispiel gezeigt, bei dem ein Behälter 101 mit rundem Boden in einem Carrier 103.1 ruht, der auf einem Arbeitstisch 103.2 sitzt. Der Arbeitstisch 103.2 und/oder der Carrier 103.1 können geerdet sein. Vorzugsweise ist bei allen Ausführungsformen der Arbeitstisch 103.2 geerdet (wie in Fig. 4B gezeigt) und der Carrier 103.1 umfasst ein nichtleitendes Material (z.B. Kunststoff). Eine geerdete Behälterumgebung 103 ist besonders geeignet.

Die automatisierte Klassifizierung der Flüssigkeit 1 kann bei allen Ausführungsformen der Erfindung in einem vordefinierten Klassifizierungsumfeld der Vorrichtung 100 erfolgen. Ein solches vordefiniertes Klassifizierungsumfeld zeichnet sich dadurch aus, dass mindestens eine der folgenden Vorgaben identisch ist mit den Vorgaben (Ermittlungsumfeld), die bei der Ermittlung des/der vordefinierten Schwellenwerte (z.B. T1) zur Anwendung gekommen sind:
- das Flüssigkeitsvolumen FV der Flüssigkeit 1 in dem Behälter 101 oder die benetzte Oberfläche zwischen der Flüssigkeit 1 und dem Behälter 101,
- der Typ des Sensors 102,
- der Typ des Behälters 101 (vorzugsweise kommt ein dedizierter Behälter zum Einsatz),
- der Typ des Carriers 103.1,
- der Typ des Arbeitstisches 103.2, auf welcher der (dedizierte) Carrier 103.1 angeordnet ist.

Falls die benetzte Oberfläche zwischen der Flüssigkeit 1 und dem Behälter 101 bekannt sind, muss nicht zwingend auch der Typ des Behälters 101 und das Flüssigkeitsvolumen FV bekannt sein, da die benetzte Oberfläche abhängig ist von dem Typ des Behälters 101 und von dem Flüssigkeitsvolumen FV.

Die vorliegende Erfindung ermöglicht auch ein Klassifizieren oder Unterscheiden z.B. von Behältern 101, wenn man mit einer bekannten (vordefinierten) Flüssigkeit, einem bekannten (vordefinierten) Flüssigkeitsvolumen FV und einem bekannten (vordefinierten) Sensor 102 in einer ansonsten bekannten Umgebung 103 die kapazitive Messungen vornimmt. In diesem Fall kann man z.B. anhand der Intensität des Signals s(t) eine Klassifizierung oder Unterscheidung z.B. der Behälter 101 vornehmen. So könnten z.B. (cLLD-)geeignete von ungeeigneten Behältern 101 automatisch unterschieden werden.

Vorzugsweise sind alle Ausführungsformen der Vorrichtung 100 mit automatisierten Messprozeduren ausgestattet, die zum Klassifizieren oder Unterscheiden von
- Behältern 101 und/oder
- Carriern 103.1 und/oder
- Arbeitstischen 103.2 und/oder
- Sensoren 102 ausgelegt sind.
In diesem Fall kann man in einer Vorrichtung 100, die mit einer entsprechenden Messprozedur ausgestattet ist, z.B. ermitteln in welcher Art von Behälter 101 sich eine Flüssigkeit 1 befindet oder z.B. welche Art von Sensor 102 (welcher Sensortyp) im Moment eingesetzt wird.

Die vorliegende Erfindung ermöglicht auch ein Unterscheiden verschiedener Flüssigkeiten 1, die in der Vorrichtung 100 verwendet werden (sollen), falls sich diese verschiedenen Flüssigkeiten 1 anhand ihrer Permittivität und Leitfähigkeit unterscheiden lassen. Ein solches Unterscheiden verschiedener Flüssigkeiten 1 kann ohne die bisher beschriebene Klassifizierung erfolgen. Zum Unterscheiden reicht es aus lediglich eine vergleichende kapazitive Messung vorzunehmen, d.h. es reicht in diesem Fall aus, wenn man relative Messungen durchführt. Wenn man z.B. weiss, dass in einer Vorrichtung 100 im Moment nur Ethanol als 1. Flüssigkeit und destilliertes, de-ionisiertes Wasser als 2. Flüssigkeit vorhanden sind, so kann man diese beiden Flüssigkeiten anhand einer Intensitätsbetrachtung der Signale s(t) unterscheiden. Auf diesem Weg können in einem automatisierten Ablauf Verwechslungen von Flüssigkeiten 1 vermieden werden.

Vorzugsweise sind alle Ausführungsformen mit einer Messprozedur ausgestattet, die zum Unterscheiden verschiedener Flüssigkeiten 1 geeignet ist.

Einflüsse, die durch räumliche Inhomogenitäten der Temperatur, des Druckes und der Flüssigkeitskonzentration oder durch ein störendes Feld entstehen können, werden hier nicht betrachtet. Um jedoch eine hohe Reproduzierbarkeit zu erreichen, sollten möglichst die wesentlichen Aspekte, die einen Einfluss haben können, festgelegt sein.

Vorzugsweise wird bei allen Ausführungsformen die Ermittlung eines flüssigkeitsspezifischen Wertes vorgenommen. Dieser flüssigkeitsspezifische Wert kann z.B. anhand der Intensität des Signals s(t) abgeleitet (z.B. durch eine Tabellenabfrage aus einer Tabelle entnommen oder schaltungstechnisch ermittelt) werden, oder er kann aus der Intensität des Signals s(t) errechnet oder abgeleitet werden. Dieser flüssigkeitsspezifische Wert, falls vorhanden, kann vorzugsweise bei allen Ausführungsformen zum genauen Einstellen des/der Schwellenwerte für eine anschliessende kapazitive Flüssigkeitsniveaumessung cLLD in der Vorrichtung 100 dienen. In diesem Fall wird der Schaltung 2 und/oder 6 vor dem Durchführen einer kapazitiven Flüssigkeitsniveaumessung cLLD der/die flüssigkeitsspezifische Wert/e zur Verfügung gestellt. Die Schaltung 2 und/oder 6 wird dann automatisch auf eine geeignete Empfindlichkeit (z.B. E1 oder E2) voreingestellt, indem der/die Schwellenwerte für die kapazitive Flüssigkeitsniveaumessung cLLD vorgegeben werden.

Je nach Ausführungsform kann das Voreinstellen der Empfindlichkeit durch Vorgabe eines oder mehrerer Schwellenwerte sV1, sV2 oder einer Schwellenwertfunktion sV(FV) oder sV(bO) durch der Schaltung 2 und/oder 6 erfolgen, oder das Voreinstellen kann durch ein Signal oder eine Steuergrösse e erfolgen, die von dem Klassifizierungsmodul 104 über eine Verbindung 106 an die Schaltung 2 und/oder 6 übermittelt oder bereitgestellt wird, wie in Fig. 4A gezeigt. In Fig. 4A ist angedeutet, dass die Schaltung 2 einen beeinflussbaren Schalter oder ein Stellglied 12 (z.B. einen Transistor oder einen Komparator) umfassen kann, der direkt oder indirekt durch das Signal oder die Steuergrösse e schaltbar/umstellbar ist.

Falls (nur) eine Klassifizierung der Flüssigkeit 1 in eine Klasse vorgenommen wurde, wie z.B. in Fig. 3 gezeigt, so kann anhand der Zugehörigkeit zu einer bestimmten Klasse das Einstellen des/der Schwellenwerte für eine anschliessende kapazitive Flüssigkeitsniveaumessung cLLD in der Vorrichtung 100 vorgenommen werden. Jeder solchen Klasse kann dann z.B. ein konstanter Schwellenwert (z.B. sV1) zugeordnet sein. Wenn also z.B. bei einer Flüssigkeit 1 in der Vorrichtung 100 eine Flüssigkeitsniveaumessung cLLD vorgenommen werden soll, dann wird die Zugehörigkeit der Flüssigkeit 1 zu einer bestimmten Klasse betrachtet, um die Einstellung des/der Schwellenwerte entsprechend dieser Klasse vorzunehmen.

Vorzugsweise umfasst die Vorrichtung 100 der Erfindung einen (Um-)Schalter oder ein Stellglied 12 (wie bereits erwähnt), um die geeigneten Schwellenwerte automatisch einzustellen, bevor eine Flüssigkeitsniveaumessung cLLD vorgenommen wird. Die eingestellten Schwellenwerte können konstant sein. Bei allen Ausführungsformen haben sie eine Abhängigkeit vom Flüssigkeitsvolumen FV (daher als sV(FV) bezeichnet) oder sie haben eine Abhängigkeit von der benetzten Oberfläche (daher als sV(bO) bezeichnet).

Fig. 4A zeigt eine beispielhafte Umsetzung einer Vorrichtung 100, die gemäss Erfindung mit einem bereits erwähnten Modul 104 ausgestattet ist, das zur automatisierten Klassifizierung einer Flüssigkeit 1 innerhalb der Vorrichtung 100 ausgelegt ist. Das Modul 104 kann, wie in Fig. 4A gezeigt, direkt über eine Leitungsverbindung 105 mit dem Sensor 102 verbunden sein. Wenn eine kapazitive Messung (Schritt S1 in Fig. 3) durchgeführt wird, so ermittelt das Modul 104 z.B. die Intensität des Signals s(t), das am Sensor 102 abgegriffen wurde (z.B. beim Ausführen einer Eintauchbewegung) oder andere Eigenschaften eines Signalsprungs. Dann erfolgt beispielsweise die Einteilung der Flüssigkeit 1, die sich im Behälter 101 befindet, z.B. in eine von zwei unterschiedlichen Sensitivitätsklassen. Wenn nun zu einem späteren Zeitpunkt in der Vorrichtung 100 eine Flüssigkeitsniveaumessung cLLD der Flüssigkeit 1 in dem Behälter 101 (oder in einem anderen Behälter) vorgenommen werden soll, so beeinflusst das Modul 104 die Einstellung des/der Schwellenwertes der Lade-/Entlade-Schaltung 2 (und/oder der Schaltung 6). In Fig. 4A ist eine Ausführungsform gezeigt, bei der ein (Um-)Schalter oder ein Stellglied 12 das Umschalten von einer ersten Empfindlichkeit E1 zu einer zweiten Empfindlichkeit E2 (oder umgekehrt) ermöglicht. Umso grösser die Empfindlichkeit ist, umso niedriger wird der entsprechende Schwellenwert angesetzt und umgekehrt.

Gemäss Erfindung kann bei allen Ausführungsformen der Erfindung die Empfindlichkeit vorgegeben werden (in Abhängigkeit von der zuvor erfolgten Klassifizierung der Flüssigkeit 1),
- um beim Laden/Entladen des Sensors 102 durch die Lade-/Entlade-Schaltung 2 die entsprechende Signale (z.B. die Amplitude der Wechselspannung und/oder die Frequenz) vorgeben zu können, und/oder
- um beim Auswerten/Verarbeiten des Signals a(t) (z.B. durch die Schaltung 6) eine entsprechende Einstellung der Empfindlichkeit vorzunehmen (z.B. indem in der Schaltung 6 ein Verstärkungsfaktor angepasst wird).

Auf diesem Wege wird ein "brauchbares" (z.B. ein Signal mit wenigen Störeinflüssen) Ausgangssignal a(t) einer Flüssigkeitsniveaumessung cLLD durch die Lade-/Entlade-Schaltung 2 bereit gestellt, das in einer nachfolgenden Signalverarbeitungsschaltung 6 weiterverarbeitet und ausgewertet werden kann.

Der Ablauf des Verfahrens 200 kann zum Beispiel durch den Controller 7 der Vorrichtung 100 ausgelöst und/oder kontrolliert werden. Das Modul 104 kann aber auch einen eigenen Controller (Prozessor) für die Ablaufsteuerung des Verfahrens 200 aufweisen.

Sowohl beim Durchführen der kapazitiven Messung als auch bei einer Flüssigkeitsniveaumessung cLLD macht das Signal, das am Sensor 102 abgegriffen werden kann beim Eintauchen und beim Austauchen einen Signalsprung. Beim Eintauchen hat das Signal ein anderes Vorzeichen als beim Austauchen. Vorzugsweise wird beim automatisierten Klassifizieren einer Flüssigkeit 1 und auch beim Durchführen einer Flüssigkeitsniveaumessung cLLD die Sprunghöhe bzw. die Amplitude ausgewertet. Hier ist daher die Rede von der Signalintensität SI des Signals s(t) im Bereich des Signalsprungs.

Wie bereits erwähnt, erfolgt die automatisierte Klassifizierung der Flüssigkeit 1 vorzugsweise bei allen Ausführungsformen unter Zuhilfenahme von Sollwerten, die (z.B. in einem vordefinierten Ermittlungsumfeld der Vorrichtung 100) ermittelt und anschliessend gespeichert wurden (z.B. in einem Speicher 107, siehe Fig. 4A). Da Sollwerte zur Hilfe genommen werden können, arbeitet die Erfindung mit qualitativen bzw. relativen Aussagen. Wenn z.B. der Signalsprung grösser ist als sVl=-60, dann wird die entsprechende Flüssigkeit 1 in die 1. KI eingeteilt, usw.

Es kann bei allen Ausführungsformen im Rahmen der kapazitiven Messung ein schnelleres Signal s1(t) und ein langsameres Signal s2(t) aus dem (Detektions-)Signal s(t) abgeleitet/gewonnen und verarbeitet werden. Aus diesen beiden Signalen s1(t) und s2(t) werden ein erster Schwellenwert sV1 für das schnelle Signal s1(t) und ein zweiter Schwellenwert sVℓ für das langsame Signal s2(t) ermittelt werden. Diese Vorgehensweise ist optional.

Fig. 5 zeigt nun eine Flüssigkeitsniveaumessung cLLD, die auf dem Verarbeiten eines schnelleren Signals s1(t) und eines langsameren Signals s2(t) beruht. In Fig. 5 ist der Verlauf der Signalintensität SI der beiden Signale über die Zeit t aufgetragen. Ausserdem ist die Lage der beiden Schwellenwerte vSs und vSf gezeigt. Wenn das Signal s1(t) den ersten Schwellenwert vSs übersteigt, dann kann dies als erstes positives Anzeichen für das Ein- oder Austauchen (je nach Vorzeichen) angesehen werden. Wenn nun auch das Signal s2(t) den zweiten Schwellenwert vSℓ (hier mit vSℓ > vSs) übersteigt, dann kann diese als definitive Bestätigung für das Ein- oder Austauchen (je nach Vorzeichen) angesehen werden.

In praktischen Anwendungen werden neben diesen beiden Schwellenwerten vSs, vSf vorzugsweise auch weitere Kriterien (hier die Pulsweite P1 des erstens Signals s1(t) und die Steigung ST des zweiten Signals s2(t)) ausgewertet, um die Richtigkeit der Detektion zu prüfen.

Gemäss Erfindung können beim automatisierten Klassifizieren der Flüssigkeit 1 mindestens zwei unterschiedliche Schwellenwerte vSs, vSℓ und vorzugsweise auch weitere Kriterien (P1, ST) ermittelt und für eine spätere Anwendung bei einer Flüssigkeitsniveaumessung cLLD abgespeichert werden. Die Schwellenwerte vSs, vSf haben bei bevorzugten Ausführungsformen eine Abhängigkeit vom Flüssigkeitsvolumen FV und/oder von der benetzten Oberfläche.

Es können bei allen Ausführungsformen für eine nachfolgende Flüssigkeitsniveaumessung cLLD mit schnellem Signal s1(t) und langsamem Signal s2(t) die Schwellenwerte vSℓ des langsamem Signals s2(t) aus den Schwellenwerten vSs des schnellen Signals s1(t) ermittelt werden, oder umgekehrt.

Im Folgenden werden Ausführungsformen beschrieben, bei denen der/die Schwellenwerte nicht konstant sind. Diese Ausführungsformen basieren auf der Erkenntnis, dass es eine Abhängigkeit vom Flüssigkeitsvolumen FV der zu klassifizierenden Flüssigkeit 1 und/oder von der benetzten Oberfläche gibt. Genauen Untersuchungen der verschiedenen Abhängigkeiten, bei denen auch die folgenden Aspekte einen Einfluss haben, haben gezeigt, dass die Intensität SI einen speziellen Kurvenverlauf hat.

Die Intensität SI ist stark abhängig von den folgenden Aspekten:
- Leitfähigkeit und relative statischer Permittivität der Flüssigkeit 1, wie bereits erwähnt;
- Flüssigkeitsvolumen FV und dem
- Typ des Behälters 101 und/oder von der benetzten Oberfläche;
- Typ des Carriers 103.1;
- Sensortyp 102;
- Typ des Arbeitstisches 103.2;
- Materialien der genannten Elemente;
- Geschwindigkeit der Bewegung B.

Bei einer Flüssigkeitsniveaumessung cLLD gemäss Erfindung muss der Sprung des Signals a(t) respektive die Signalintensität SI deutlich grösser sein als alle diese Störeinflüsse.

Für leitfähige Flüssigkeiten 1 wird das Signal s(t) oder a(t) näher zum Boden des Behälters 101 immer kleiner, umso kleiner das Volumen FV wird, respektive umso kleiner die momentan benetzte Oberfläche wird.

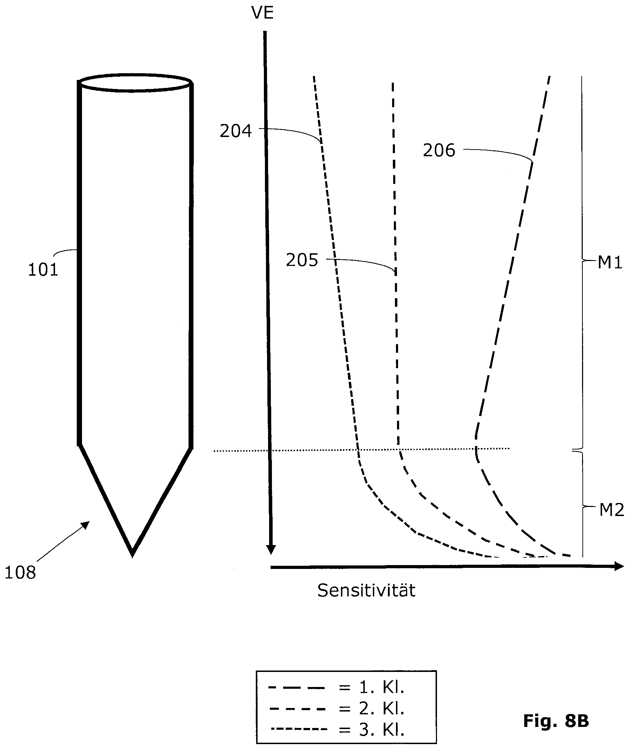

Die Form (Geometrie) des Behälters 101 ist auch relevant. Z.B. ist bei einem gleichen Flüssigkeitsvolumen FV die Signalintensität SI grösser in einem Behälter 101 leicht gewölbtem Boden (siehe z.B. Fig. 4B) als in einem Behälter mit V-förmigen Boden (siehe z.B. Fig. 8B).

Gemäss Erfindung sollen auch kleinste Volumina mess-/detektierbar gemacht werden. D.h. die Grenzen des Machbaren sollen in Richtung kleiner Volumina FV verschoben werden. Vorzugsweise sollen Volumina FV detektierbar sein, die kleiner sind als 10 µl und vorzugsweise kleiner als 5 µl.

Um gute Ergebnisse bei einer kapazitiven Flüssigkeitsniveaumessung cLLD gemäss Erfindung zu erzielen, sollte das Material des Behälters 101 bei allen Ausführungsformen nicht-leitend sein und der Boden des Behälters 101 kann den geerdeten Arbeitstisch 103.2 berühren oder nahe daran sein (Abstand AB < 2mm, siehe Fig. 4B).

Vorzugsweise kommen bei allen Ausführungsformen spezielle Carrier 103.1 zum Einsatz, die für eine kapazitive Flüssigkeitsniveaumessung cLLD optimiert sind. Ein solcher Carrier 103.1 sollte eine oder mehrere der folgenden Kriterien erfüllen (es wird hier auf das Beispiel der Fig. 4B verwiesen):
- Die Carrierwände 103.3 sind nicht-leitend ausgelegt;
- Der Carrierboden 103.4 ist leitend ausgelegt und geerdet (zum Beispiel zusammen mit dem Arbeitstisch 103.2, wie in Fig. 4B schematisch gezeigt);
- Der Carrierboden 103.4 ist so ausgelegt, dass er sich nahe an der Flüssigkeit 1 befindet.

Fig. 4C zeigt eine perspektivische Ansicht eines beispielhaften Carriers 103.1, der hier mit 12 Röhrchen 101 bestückt ist. In dieser Abbildung kann man deutlich den Boden 103.4 des Carriers 103.1 und die Wandungen 103.3 erkennen. Der Carrierboden 103.4 kann zum Beispiel so mit dem Arbeitsbereich 103.2 verbunden werden, dass er zusammen mit dem Arbeitsbereich 103.2 geerdet ist.

Alles in allem sind die folgenden Regeln oder Ansätze zu berücksichtigen, wenn besonders zuverlässig und genau arbeitende Vorrichtungen 100 oder Verfahren 200 bereitgestellt werden sollen.
- Der Schwellenwert steht in Bezug zum Sprung der Kapazität (Signalsprung), der beim Eintauchen (oder Austauchen) auftritt.
- Der Schwellenwert muss ausgewogen sein zwischen der Sensitivität gegenüber der Flüssigkeit 1 und der Unempfindlichkeit gegenüber der Umgebung (z.B. der Behälterumgebung 103).
- Falls der Schwellenwert zu niedrig angesetzt wird, dann wird die Flüssigkeitsniveaumessung cLLD immer empfindlicher. Dadurch werden falsche Messungen wahrscheinlicher.
- Falls der Schwellenwert zu hoch angesetzt wird, dann wird die Flüssigkeitsniveaumessung cLLD immer unempfindlicher. D.h. der Sensor 102 muss tiefer in die Flüssigkeit 1 eintauchen (Verfehlen eines Flüssigkeitsniveaus), bevor der Kapazitätssprung gross genug ist um detektiert werden zu können. Ausserdem können dann Flüssigkeiten 1 mit schwacher Leitfähigkeit nicht mehr detektiert werden.

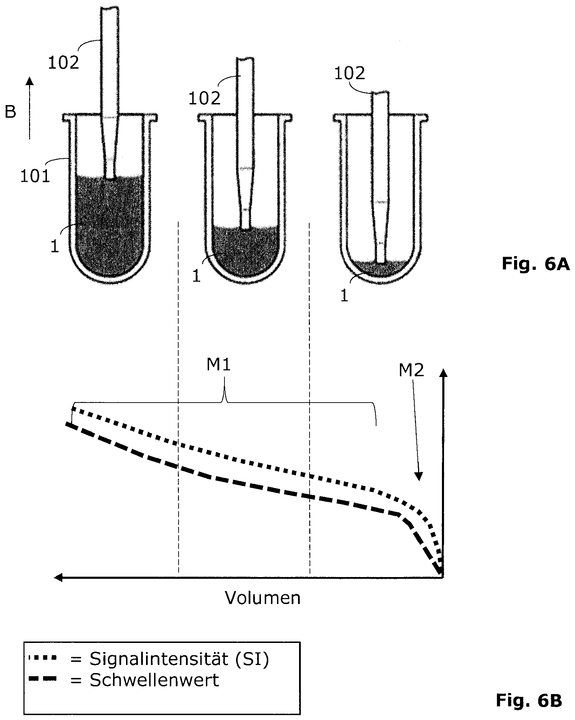

Fig. 6A zeigt eine schematische Ansicht dreier identischer Behälter 101, die jeweils mit unterschiedlichen Flüssigkeitsvolumen FV befüllt sind. Von links nach rechts nimmt das Flüssigkeitsvolumen FV ab. Fig. 6B zeigt ein schematisches Diagramm, das in Bezug gesetzt ist zu den drei Füllstandssituationen, die in Fig. 6A gezeigt sind. In diesem Diagramm sind einerseits die Signalintensität SI beim Austauchen des Fühlers 102 aus einer leitfähigen Flüssigkeit 1 und andererseits geeignete Schwellenwerte dargestellt.

Aus diesen Figuren lassen sich einige der oben bereits angeführten Aussagen bestätigen. Die Intensität SI nimmt mit kleiner werdendem Flüssigkeitsvolumen FV, respektive mit abnehmender benetzter Oberfläche ab. Die Intensitätskurve (in Fig. 6B die obere Kurve) hat einen ausgeprägten ersten Bereich M1, der monoton fallend ist und der durch eine Gerade mit konstantem Gefälle angenähert werden kann. Die Intensitätskurve hat ausserdem einen zweiten Bereich M2, der stark abfallend ist und dessen Gefälle zunimmt. Für sehr kleine Volumen FV sind keine Messergebnisse verfügbar.

Gemäss Erfindung wird nun bei allen Ausführungsformen im Rahmen der automatisierten Klassifizierung jedem Wert der Intensitätskurve ein entsprechender Schwellenwert zugeordnet. Damit bei einer Flüssigkeitsniveaumessung cLLD Signale beim Ein- oder Austauchen detektierbar bleiben, muss der zugeordnete Schwellenwert stets ein kleines Stück kleiner sein als der Werte der Intensitätskurve. In Fig. 6B stellt die untere Kurve einen möglichen Verlauf einer Schwellenwertkurve dar.

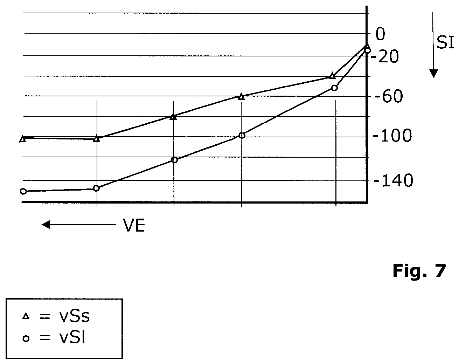

Gemäss Erfindung wird bei allen Ausführungsformen eine Reihe von diskreten Schwellenwerten ermittelt (wie z.B. in Fig. 7 gezeigt). Es kann aber auch bei allen Ausführungsformen eine Schwellenwertfunktion sV(FV) oder sV(bO) ermittelt werden, wobei die Schwellenwertfunktion sV(FV) eine Abhängigkeit von dem Flüssigkeitsvolumen FV bzw. die Schwellenwertfunktion sV(bO) eine Abhängigkeit von der benetzten Oberfläche der Flüssigkeit 1 in dem Behälter 101 aufweist.

Vorzugsweise wird bei allen Ausführungsformen die Flüssigkeitsniveaumessung cLLD so durchgeführt, dass das zu messende Flüssigkeitsvolumen FV und/oder die momentane benetzte Oberfläche einen Einfluss haben/hat auf die Wahl des Schwellenwertes. Mit abnehmenden Flüssigkeitsvolumen FV oder mit abnehmender benetzter Oberfläche nimmt vorzugsweise auch der Schwellenwert ab. Somit wird die Sensitivität der cLLD Flüssigkeitsniveaumessung immer geringer.

Fig. 7 zeigt ein schematisches Diagramm, das eine Reihe von diskreten Schwellenwerten zeigt, die für das Durchführen einer kapazitiven Flüssigkeitsniveaumessung cLLD geeignet sind, die ein erstes schnelleres Signal s1(t) und ein zweites langsameres Signal s2(t) auswertet (siehe auch Fig. 5). Auf der x-Achse sind die Volumeneinheiten und auf der y-Achse die Signalintensität SI aufgetragen. Mit grösser werdendem Volumen FV wird der Signalsprung beim Ein- oder Austauchen immer grösser, d.h. die Intensität SI nimmt zu. Entsprechend werden auch die Schwellenwerte immer grösser.

Vorzugsweise kommen bei allen Ausführungsformen, die mit zwei Signalen s1(t), s2(t) arbeiten, Schwellenwertkurven zum Einsatz, deren Verlauf für beide Signale identisch oder ähnlich ist (wie in Fig. 7 gezeigt). Die Schwellenwertkurve für das schnellere Signal s1(t) ist mit vSs und die Schwellenwertkurve für das langsamere Signal s2(t) ist mit vSℓ bezeichnet. Es gilt vorzugsweise bei allen Ausführungsformen vSℓ > vSs (wie auch in Fig. 5 gezeigt).

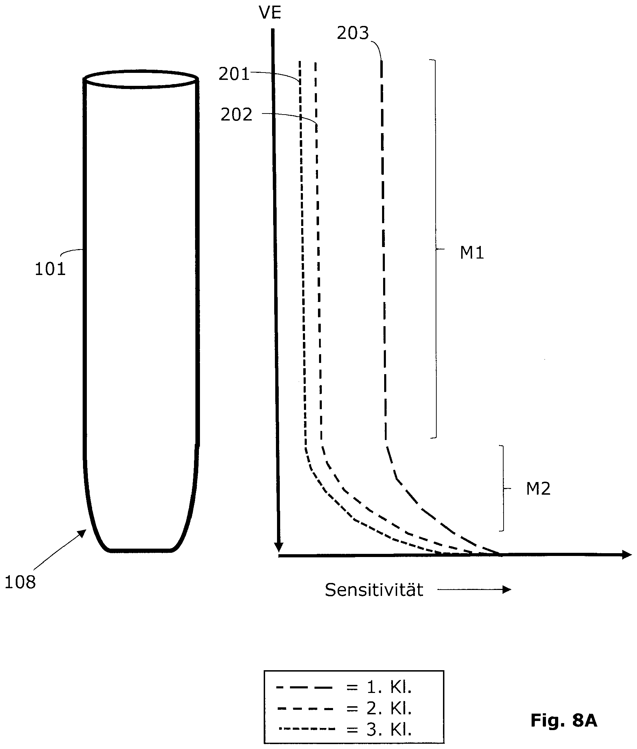

Fig. 8A zeigt ein stark schematisiertes Diagramm, das in Bezug gesetzt ist zu einem links gezeigten Behälter 101, der hier einen leicht gewölbten Boden 108 hat. In diesem Diagramm ist für jede von drei Flüssigkeitsklassen eine Kurve 201, 202, 203 vorgegeben, die in Fig. 8A in schematisierter Form dargestellt sind. Im Diagramm ist die Volumeneinheit VE über die Sensitivität aufgetragen. Auch hier kann man erkennen, dass bei den Flüssigkeiten aller drei Sensitivitätsklassen 1. KI., 2. KI. und 3. KI. die Sensitivität mit abnehmenden Volumen FV (b.zw. mit abnehmender benetzter Oberfläche) deutlich zunehmen muss, um erfolgreiche Flüssigkeitsniveaumessungen cLLD durchführen zu können. Die drei Kurven 201, 202, 203 können gleich oder ähnlich sein, wie in Fig. 8A dargestellt. Die drei Kurven können aber auch deutlich unterschiedlich sein, wie in Fig. 8B dargestellt.

Fig. 8B zeigt ein stark schematisiertes Diagramm, das in Bezug gesetzt ist zu einem links gezeigten Behälter 101, der hier einen V-förmigen, spitz zulaufenden Boden 108 hat. Der V-förmige Boden 108 ist hier besonders deutlich ausgeprägt, um eine Situation zeigen zu können, in der die Abhängigkeit der Kurvenverläufe von der benetzten Oberfläche deutlich zu erkennen ist. Wie in Fig. 8A sind der drei Sensitivitätsklassen 1. KI., 2. KI. und 3. KI. gezeigt. Bei einer Flüssigkeit mit besonders guten Leitfähigkeit (3. KI.), hat die entsprechende Kurve 204 einen monoton leicht ansteigenden Verlauf (der z.B. im Bereich M1 linear ansteigend sein kann). Im Bereich des Übergangs vom rein zylinderförmigen Bereich des Behälters 101 zum spitz zulaufenden Boden 108, hat die Kurve 204 einen gekrümmten Verlauf mit deutlich zunehmender Steigung (Bereich M2 in Fig. 8B). Die Kurve 205 der gute leitenden Flüssigkeit (2. KI.) hat einen geradlinigen Verlauf, der keine Steigung bzw. kein Gefälle hat, oder dessen Steigung oder Gefälle nur sehr gering ist (Bereich M1 in Fig. 8B). Bei der Kurve 206 der schlecht leitenden Flüssigkeit (1. KI.) kippt die Kurve 206 in der schematischen Darstellung der Fig. 8B nach rechts. Diese Kurve 206 hat einen geradlinigen Verlauf mit einem Gefälle im Bereich M2 in Fig. 8B. Das Kippen der Kurve 206 nach rechts kann vereinfacht dadurch erklärt werden, dass bei einer schlecht leitenden Flüssigkeit die Grösse der benetzten Fläche im Bereich M1 der Kurve 206 keine Rolle spielt. In diesem Bereich ist der Abstand AB zum Arbeitstisch 103.2 deutlich dominanter.

Aus Fig. 8B kann man ableiten, dass die Sensitivitätskurven verschiedener Flüssigkeiten durchaus einen unterschiedlichen Verlauf haben können. Daher können auch die Schwellenwertkurven, je nach Leitfähigkeit der Flüssigkeit, einen anderen Verlauf haben.

Vorzugsweise werden zwei und besonders vorzugsweise drei Sensitivitätsklassen 1. KI., 2. KI. und 3. KI. vorgegeben (siehe auch Fig. 8A und 8B). Diese Sensitivitätsklassen 1. KI., 2. KI. und 3. KI. können z.B. wie folgt definiert werden:
- Leitfähige Flüssigkeiten mit Leitfähigkeit < 10 µS und relativer statischer Permittivität zwischen 24 und 80 (schlechte Leitfähigkeit: 1. KI.)
- Leitfähige Flüssigkeiten mit Leitfähigkeit < 10 µS und relativer statischer Permittivität > 80 (gute Leitfähigkeit 2. KI.)
- Leitfähige Flüssigkeiten mit Leitfähigkeit > 100 µS (sehr gute Leitfähigkeit 3. KI.).

**Bezugszeichen:**

| | |
|---|---|
| Flüssigkeit | 1 |
| Lade-/Entlade-Schaltung | 2 |
| Pipettenspitze | 3 |
| Grundplatte | 4 |
| Behälter | 5 |
| Signalverarbeitungsschaltung | 6 |
| Controller | 7 |
| Laborgerät | 10 |
| Eingangsseite | 11 |
| Schalter/Stellglied | 12 |
| | |
| Vorrichtung | 100 |
| Behälter (Labware) | 101 |
| Sensor | 102 |
| Carrier / Träger | 103.1 |
| Arbeitstisch / Oberfläche / Grundplatte | 103.2 |
| Carrierwandung | 103.3 |
| Carrierboden | 103.4 |
| Behälterumqebunq | 103 |
| Klassifizierunqsmodul | 104 |
| Leitungsverbindung | 105 |
| Schaltungstechnische Verbindung | 106 |
| Speicher | 107 |
| Boden | 108 |
| | |
| Flüssigkeitsniveaumesssystem | 110 |
| | |
| Verfahren | 200 |
| Kurven | 201, 202, 203, 204, 205, 206 |
| | |
| Ausgangssignal der cLLD | a(t) |
| Abstand | AB |
| Zustellbewegung | B |
| Flüssiqkeitsniveaumessung | cLLD |
| Kapazität zwischen Sensor und Flüssigkeit | C_{tip/liq} |
| Serienkapazität | C_{coupl} |
| Perm ittivität | ε |
| frequenzabhängigen Permittivität | ε(ω) |
| Feldkonstante | ε₀ |
| Steuergrösse oder Signal | e |
| erste Empfindlichkeit | E1 |
| zweite Empfindlichkeit | E2 |
| Flüssigkeitsvolumen | FV |
| Verfahrensschritte | S1, S2, S3, S4, S5, S6 |
| Ausgangssignal / (Detektions-) Signal | s(t) |
| (Signal-)Intensität | SI |
| Sensitivitätsklasse | KI |
| erster Bereich | M1 |
| zweiter Bereich | M2 |
| Zeit | t |
| erster Schwellenwert | sV1 |
| zweiter Schwellenwert | sV2 |
| Schwellenwertfunktion in Abhängigkeit vom Flüssigkeitsvolumen | sV(FV) |
| Schwellenwertfunktion in Abhängigkeit von der benetzten Oberfläche | sV(bO) |
| Volumeneinheiten | VE |
| vordefinierter Schwellwert | vS |
| vordefinierter Schwellwert schnelles Signal | vSs |
| vordefinierter Schwellwert lanqsames Signal | vSℓ |
| Admittanz | Y |
| komplexe Größe / Impedanz | Z |

## Patentansprüche

1. Verfahren (200) zur automatisierten Klassifizierung einer Flüssigkeit (1) in einer Vorrichtung (100), die dazu ausgelegt ist eine kapazitive Flüssigkeitsniveaumessung (cLLD) der Flüssigkeit (1) in einem Behälter (101) vorzunehmen, wobei das Verfahren (200) die folgenden Schritte umfasst:
- Bereitstellen der Flüssigkeit (1) in einem Behälter (101),
- Herstellen einer Leitungsverbindung (105) zwischen einem Klassifizierungsmodul (104) der Vorrichtung (100) und einem Sensor (102) zum Durchführen einer kapazitiven Messung dieser Flüssigkeit (1) unter Einsatz des Klassifizierungsmoduls (104)
∘ beim Ausführen einer Eintauchbewegung eines Sensors (102) in die Flüssigkeit (1) hinein, oder
∘ beim Ausführen einer Austauchbewegung eines Sensors (102) aus der Flüssigkeit (1) heraus,
- wobei ein Signalsprung eines Signal (s(t)) der kapazitiven Messung verarbeitet wird, der bei der Eintauchbewegung des Sensors (102) in die Flüssigkeit (1) hinein oder bei der Austauchbewegung des Sensors (102) aus der Flüssigkeit (1) heraus entsteht und daraus ein Schwellenwert (vS1; vS2) und/oder eine Schwellenwertfunktion (vS(FV); vS(bO)) ermittelt wird,
um die automatisierte Klassifizierung der Flüssigkeit (1) für eine nachfolgende kapazitive Flüssigkeitsniveaumessung (cLLD) vorzunehmen, wobei die Vorgabe des Schwellenwertes (vS1, vS2; vS(FV); vS(bO)) für eine nachfolgende kapazitive Flüssigkeitsniveaumessung (cLLD) über einem der Vorrichtung (100) zugeordnetem Schalter oder Stellglied (12) automatisch durch das Klassifizierungsmodul (104) eingestellt wird, wobei das Klassifizierungsmodul (104) schaltungstechnisch (106) mit der Lade-/Entladeschaltung (2) oder der Signalverarbeitungsschaltung (6) oder mit beiden Schaltungen (2) und (6) verbunden ist, um nach dem Einsatz des Sensors (102) zur kapazitiven Messung der Flüssigkeit (1) die Vorgabe des Schwellenwertes (vS1, vS2; vS(FV); vS(bO)) für die nachfolgende kapazitive Flüssigkeitsniveaumessung (cLLD) automatisch über den Schalter oder das Stellglied (12) auszulösen,
**dadurch gekennzeichnet, dass**
im Rahmen der kapazitiven Messung mehrere Sensoren (102) nacheinander in den Behälter (101) hinein eine Eintauchbewegung ausführen, wobei beim Eintauchen eines ersten Sensors (102) ein erster Signalsprung oder ein erster Intensitätswert und beim Eintauchen eines zweiten Sensors (102) ein zweiter Signalsprung oder ein zweiter Intensitätswert ermittelt werden, und wobei aus den beiden Signalsprüngen oder den beiden Intensitätswerten ein Mittelwert gebildet wird.

2. Verfahren (200) nach Anspruch 1, **dadurch gekennzeichnet, dass** die Intensität (SI) des Signals (s(t)) im Bereich des Signalsprungs und/oder die Amplitude des Signalsprungs verarbeitet werden, um die automatisierte Klassifizierung der Flüssigkeit (1) vorzunehmen.

3. Verfahren (200) nach Anspruch 1 oder 2, **dadurch gekennzeichnet, dass** für die automatisierte Klassifizierung der Flüssigkeit (1) die folgenden Schritte durchgeführt werden:
- Klassifizierung (S4) der Flüssigkeit (1) in eine erste Sensitivitätsklasse, falls der Signalsprung des Signals (s(t)) der kapazitiven Messung oberhalb eines vordefinierten Schwellenwerts (vS) liegt,
- Klassifizierung (S5) der Flüssigkeit (1) in eine zweite Sensitivitätsklasse, falls der Signalsprung des Signals (s(t)) der kapazitiven Messung unterhalb des vordefinierten Schwellenwerts (vS) liegt.

4. Verfahren (200) nach einem der Ansprüche 1, 2 oder 3, **dadurch gekennzeichnet, dass** die automatisierte Klassifizierung der Flüssigkeit (1) unter Zuhilfenahme von Sollwerten erfolgt, die in einem vordefinierten Ermittlungsumfeld der Vorrichtung (100) ermittelt und anschliessend gespeichert wurden.

5. Verfahren (200) nach Anspruch 4, **dadurch gekennzeichnet, dass** die automatisierte Klassifizierung der Flüssigkeit (1) in einem definierten Klassifizierungsumfeld der Vorrichtung (100) erfolgt, wobei das Klassifizierungsumfeld mindestens in Bezug auf eine der folgenden Vorgaben identisch ist mit dem Ermittlungsumfeld:
- das Flüssigkeitsvolumen (FV) der Flüssigkeit (1) in dem Behälter (101),
- durch die Flüssigkeit (1) in dem Behälter (101) benetzte Oberfläche,
- der Typ des Sensors (102),
- der Typ des Behälters (101),
- der Typ des Carriers (103.1) für den Behälter (101),
- der Typ des Arbeitstisches (103.2) auf welchem der Carrier (103.1) angeordnet ist.

6. Verfahren (200) nach einem der Ansprüche 1 bis 5, **dadurch gekennzeichnet, dass** ein dedizierter Probenbehälter als Behälter (101) dient, der mit einem bekannten Flüssigkeitsvolumen (FV) der Flüssigkeit (1) befüllt ist, wobei zur automatisierten Klassifizierung der Flüssigkeit (1) eine prozessorgesteuerte Prozedur zur automatisierten Ermittlung der Sensitivität dieser Flüssigkeit (1) durchgeführt wird.

7. Verfahren (200) nach Anspruch 6, **dadurch gekennzeichnet, dass** im Rahmen dieser Prozedur der Sensor (102) aus einer Stellung oberhalb eines Niveaus der Flüssigkeit (1) in dem dedizierten Probenbehälter in die Flüssigkeit (1) eingetaucht wird, wobei beim Eintauchen des Sensors (102) die kapazitive Messung (cLLD) durchgeführt wird und wobei anhand einer Kapazitätsänderung, die sich beim Eintauchen ergibt, entweder ein Sensitivitätswert für diese Flüssigkeit (1) ermittelt wird oder die Flüssigkeit (1) anhand eines Vergleichs mit vorgegebenen Grössen in eine Sensitivitätsklasse eingeteilt wird.

8. Verfahren (200) nach einem der Ansprüche 1 bis 5, **dadurch gekennzeichnet, dass** im Rahmen der kapazitiven Messung für die Flüssigkeit (1)
- eine Reihe von diskreten Schwellenwerten (vS1; vS2) und/oder
- eine Schwellenwertfunktion (vS(FV); vS(bO)) ermittelt wird/werden, wobei die Schwellenwertfunktion (vS(FV); vS(bO)) eine Abhängigkeit von dem Flüssigkeitsvolumen (FV) der Flüssigkeit (1) in dem Behälter (101) oder von der benetzten Oberfläche in dem Behälter (101) aufweist.

9. Verfahren (200) nach einem der Ansprüche 1 bis 8, **dadurch gekennzeichnet, dass** in einem nachfolgenden Schritt in der Vorrichtung (100) eine kapazitive Flüssigkeitsniveaumessung (cLLD) unter Verwendung eines Signals (s(t); s1(t), s2(t)) durchgeführt wird, das von dem Sensor (102) bereitgestellt wird, wobei für diese kapazitive Flüssigkeitsniveaumessung (cLLD) anhand der zuvor erfolgten Klassifizierung automatisch eine Einstellung der Empfindlichkeit (E1, E2) der kapazitiven Flüssigkeitsniveaumessung (cLLD) vorgenommen wird.

10. Vorrichtung (100), die mehrere zustellbare Sensoren (102), einen Behälter (101) zur Aufnahme einer Flüssigkeit (1), eine Behälterumgebung (103) und eine Signalverarbeitungsschaltung (6) umfasst, deren Eingangsseite (11) schaltungstechnisch mit den Sensoren (102) verbindbar ist, wobei die Vorrichtung (100) dazu ausgelegt ist im Normalbetrieb unter Einsatz der Sensoren (102) eine kapazitive Flüssigkeitsniveaumessung (cLLD) der Flüssigkeit (1) in dem Behälter (101) vorzunehmen, wobei
- der Signalverarbeitungsschaltung (6) für den Normalbetrieb ein Schwellenwert (vS1, vS2; vS(FV); vS(bO)) vorgebbar ist, **dadurch gekennzeichnet, dass**
- die Vorrichtung (100) einen Schalter oder ein Stellglied (12) sowie ein Klassifizierungsmodul (104) umfasst,
i. das mit einer Eingangsseite (11) oder Leitungsverbindung (105) schaltungstechnisch mit den Sensoren (102) verbindbar ist,
ii. das dazu ausgelegt ist unter Einsatz der Sensoren (102) eine kapazitive Messung der Flüssigkeit (1) in dem Behälter (101) vorzunehmen, und
iii. das schaltungstechnisch (106) mit der Lade-/Entladeschaltung (2) oder der Signalverarbeitungsschaltung (6) oder mit beiden Schaltungen (2) und (6) verbunden ist, um nach dem Einsatz der Sensoren (102) zur kapazitiven Messung der Flüssigkeit (1) die Vorgabe des Schwellenwertes (vS1, vS2; vS(FV); vS(bO)) automatisch über den Schalter oder das Stellglied (12) auszulösen, **dadurch gekennzeichnet, dass**
die Vorrichtung so konfiguriert ist, dass im Rahmen der kapazitiven Messung mehrere Sensoren (102) nacheinander in den Behälter (101) hinein eine Eintauchbewegung ausführen können, wobei beim Eintauchen eines ersten Sensors (102) ein erster Signalsprung oder ein erster Intensitätswert und beim Eintauchen eines zweiten Sensors (102) ein zweiter Signalsprung oder ein zweiter Intensitätswert ermittelt werden, und wobei aus den beiden Signalsprüngen oder den beiden Intensitätswerten ein Mittelwert gebildet wird.

11. Vorrichtung (100) nach Anspruch 10, **dadurch gekennzeichnet, dass** die Vorrichtung (100) für die kapazitive Messung der Flüssigkeit (1) ein vordefiniertes Umfeld umfasst, wobei in dem vordefinierten Umfeld mindestens einer der folgenden Aspekte vorgegeben sind:
- der Typ eines dedizierten Behälters (101),
- das Flüssigkeitsvolumen (FV) der Flüssigkeit (1) in dem dedizierten Behälter (101),
- die durch die Flüssigkeit (1) in dem Behälter (101) benetzte Oberfläche,
- der Typ des Sensors (102),
- der Typ eines Carriers (103.1), zur Aufnahme oder zum Halten des dedizierten Behälters (101),
- der Typ eines Arbeitstisches (103.2) auf welchem der Carrier (103.1) angeordnet ist.

12. Vorrichtung (100) nach Anspruch 10 oder 11, **dadurch gekennzeichnet, dass** in dem Klassifizierungsmodul (104) eine Prozedur, vorzugsweise eine prozessor-gesteuerte Prozedur, zur automatisierten Ermittlung der Sensitivität und/oder des Schwellenwertes (vS1, vS2; vS(FV); vS(bO)) dieser Flüssigkeit (1) implementiert ist.

13. Verfahren (200) nach Anspruch 8, **dadurch gekennzeichnet, dass** eine Vorrichtung nach Anspruch 11, 12 oder 13 verwendet wird.

14. Vorrichtung (100) nach Anspruch 10 oder 11, **dadurch gekennzeichnet, dass** in dem Klassifizierungsmodul (104) eine Prozedur, vorzugsweise eine prozessor-gesteuerte Prozedur, zur automatisierten Verarbeitung eines kapazitiven Signals (s(t)) implementiert ist, die über die Eingangsseite oder Leitungsverbindung (105) von dem Sensor (102) übermittelt oder bereitgestellt wird.

15. Vorrichtung (100) nach Anspruch 12 oder 14, **dadurch gekennzeichnet, dass** das Klassifizierungsmodul (104) dazu ausgelegt ist eine Steuergrösse oder ein Signal (e) bereitzustellen, das in der Signalverarbeitungsschaltung (6) die Vorgabe des Schwellenwertes (vS1, vS2; vS(FV); vS(bO)) auslöst.

16. Verfahren (200) nach Anspruch 8 welches des Weiteren zum Durchführen einer kapazitiven Flüssigkeitsniveaumessung (cLLD) einer Flüssigkeit (1) in einem Behälter (101) die folgenden Schritte umfasst:
- Bereitstellen der Flüssigkeit (1) in einem Behälter (101),
- Durchführen der kapazitiven Flüssigkeitsniveaumessung (cLLD)
∘ beim Ausführen einer Eintauchbewegung eines Sensors (102) in die Flüssigkeit (1) hinein, oder
∘ beim Ausführen einer Austauchbewegung eines Sensors (102) aus der Flüssigkeit heraus,
wobei vor dem oder bei dem Ausführen der Eintauchbewegung oder der Austauchbewegung eine Sensitivitätsanpassung der kapazitiven Flüssigkeitsniveaumessung (cLLD) anhand der Reihe diskreter Schwellenwerte (vS1; vS2) oder anhand der vorgegebenen Schwellenwertfunktion (vS(FV); vS(bO)) erfolgt.

## Claims

1. A method (200) for automatically classifying a liquid (1) in a device (100), which is designed to carry out a capacitive liquid level measurement (cLLD) of the liquid (1) in a container (101), wherein the method (200) comprises the following steps:
- providing the liquid (1) in a container (101),
- establishing a line connection (105) between a classification module (104) of the device (100) and a sensor (102) to carry out a capacitive measurement of this liquid (1) while using the classification module (104)
- during the execution of an immersion movement of a sensor (102) into the liquid (1) or
- during the execution of an emerging movement of a sensor (102) out of the liquid (1),
- wherein a signal jump of a signal (s(t)) of the capacitive measurement is processed, which arises during the immersion movement of the sensor (102) into the liquid (1) or during the emerging movement of the sensor (102) out of the liquid (1) and a threshold value (vS 1; vS2) and/or a threshold value function (vS(FV); vS(bO)) is ascertained therefrom,
to carry out the automated classification of the liquid (1) for a subsequent capacitive liquid level measurement (cLLD),
wherein the specification of the threshold value (vS1; vS2; vS(FV); vS(bO)) for a subsequent capacitive liquid level measurement (cLLD) is set automatically by the classification module (104) via a switch or an actuator (12) associated with the device (100), wherein the classification module (104) is connected by circuitry (106) to the charging/discharging circuit (2) or the signal processing circuit (6) or to both circuits (2) and (6), in order to automatically trigger the specification of the threshold value (vS1; vS2; vS(FV); vS(bO)) for the following capacitive liquid level measurement (cLLD) via the switch or the actuator (12) after the use of the sensor (102) for the capacitive measurement of the liquid (1),
**characterized in that**, in the scope of the capacitive measurement, multiple sensors (102) execute an immersion movement into the container (101) in succession, wherein a first signal jump or a first intensity value is ascertained during the immersion of a first sensor (102) and a second signal jump or a second intensity value is ascertained during the immersion of a second sensor (102), and wherein a mean value is formed from the two signal jumps or the two intensity values.

2. The method (200) according to Claim 1, **characterized in that** the intensity (SI) of the signal (s(t)) in the region of the signal jump and/or the amplitude of the signal jump is/are processed to perform the automated classification of the liquid (1).

3. The method (200) according to Claim 1 or 2, **characterized in that** the following steps are carried out for the automated classification of the liquid (1):
- classification (S4) of the liquid (1) in a first sensitivity class, if the signal jump of the signal (s(t)) of the capacitive measurement is above a predefined threshold value (vS),
- classification (S5) of the liquid (1) in a second sensitivity class, if the signal jump of the signal (s(t)) of the capacitive measurement is below the predefined threshold value (vS).

4. The method (200) according to any one of Claims 1, 2, or 3, **characterized in that** the automated classification of the liquid (1) takes place with the aid of setpoint values, which were ascertained in a predefined ascertainment environment of the device (100) and were subsequently stored.

5. The method (200) according to Claim 4, **characterized in that** the automated classification of the liquid (1) takes place in a defined classification environment of the device (100), wherein the classification environment is identical to the ascertainment environment at least with respect to one of the following specifications:
- the liquid volume (FV) of the liquid (1) in the container (101),
- the surface wetted by the liquid (1) in the container (101),
- the type of the sensor (102),
- the type of the container (101),
- the type of the carrier (103.1) for the container (101),
- the type of the worktable (103.2) on which the carrier (103.1) is arranged.

6. The method (200) according to any one of Claims 1 to 5, **characterized in that** a dedicated sample container is used as the container (101), which is filled with a known liquid volume (FV) of the liquid (1), wherein a processor-controlled procedure for the automated ascertainment of the sensitivity of this liquid (1) is carried out for the automated classification of the liquid (1).

7. The method (200) according to Claim 6, **characterized in that**, in the scope of this procedure, the sensor (102) is immersed from a position above a level of the liquid (1) in the dedicated sample container into the liquid (1), wherein the capacitive measurement (cLLD) is carried out during the immersion of the sensor (102) and wherein either a sensitivity value for this liquid (1) is ascertained on the basis of a capacitance change which results during the immersion, or the liquid (1) is classified into a sensitivity class on the basis of a comparison to predefined dimensions.

8. The method (200) according to any one of Claims 1 to 5, **characterized in that**, in the scope of the capacitive measurement,
- an array of discrete threshold values (vS1; vS2) and/or
- a threshold value function (vS(FV); vS(bO)) is/are ascertained for the liquid (1), wherein the threshold value function (vS(FV); vS(bO)) has a dependence on the liquid volume (FV) of the liquid (1) in the container (101) or on the wetted surface in the container (101).

9. The method (200) according to any one of Claims 1 to 8, **characterized in that**, in a following step in the device (100), a capacitive liquid level measurement (cLLD) is carried out using a signal (s(t); s1(t), s2(t)) which is provided by the sensor (102), wherein a setting of the sensitivity (E1, E2) of the capacitive liquid level measurement (cLLD) is performed automatically for this capacitive liquid level measurement (cLLD) on the basis of the previously performed classification.

10. A device (100), which comprises multiple adjustable sensors (102), a container (101) for accommodating a liquid (1), a container environment (103), and a signal processing circuit (6), the input side (11) of which is connectable by circuitry to the sensors (102), wherein the device (100) is designed, in normal operation using the sensors (102), to carry out a capacitive liquid level measurement (cLLD) of the liquid (1) in the container (101), wherein
- a threshold value (vS 1; vS2; vS(FV); vS(bO)) is predefinable for the signal processing circuit (6) for the normal operation, **characterized in that**
- the device (100) comprises a switch or a actuator (12) and a classification module (104),
i. which is connectable at an input side (11) or line connection (105) by circuitry to the sensors (102),
ii. which is designed to carry out a capacitive measurement of the liquid (1) in the container (101) using the sensors (102), and
iii. which is connected by circuitry (106) to the charging/discharging circuit (2) or the signal processing circuit (6) or to both circuits (2) and (6), in order to automatically trigger the specification of the threshold value (vS1; vS2; vS(FV); vS(bO)) via the switch or the actuator (12) after the use of the sensors (102) for the capacitive measurement of the liquid (1),
**characterized in that** the device is configured in such a way that in the scope of the capacitive measurement, multiple sensors (102) can execute an immersion movement into the container (101) in succession, wherein a first signal jump or a first intensity value is ascertained during the immersion of a first sensor (102) and a second signal jump or a second intensity value is ascertained during the immersion of a second sensor (102), and wherein a mean value is formed from the two signal jumps or the two intensity values.

11. The device (100) according to Claim 10, **characterized in that** the device (100) for the capacitive measurement of the liquid (1) comprises a predefined environment, wherein at least one of the following aspects is specified in the predefined environment:
- the type of a dedicated container (101),
- the liquid volume (FV) of the liquid (1) in the dedicated container (101),
- the surface wetted by the liquid (1) in the container (101),
- the type of the sensor (102),
- the type of a carrier (103.1) for accommodating or holding the dedicated container (101),
- the type of a worktable (103.2) on which the carrier (103.1) is arranged.

12. The device (100) according to Claim 10 or 11, **characterized in that** a procedure, preferably a processor-controlled procedure, for the automated ascertainment of the sensitivity and/or the threshold value (vS1; vS2; vS(FV); vS(bO)) of this liquid (1) is implemented in the classification module (104).

13. The method (200) according to Claim 8, **characterized in that** a device according to Claim 11, 12, or 13 is used.

14. The device (100) according to Claim 10 or 11, **characterized in that** a procedure, preferably a processor-controlled procedure, for the automated processing of a capacitive signal (s(t)), which is transmitted or provided via the input side or line connection (105) by the sensor (102), is implemented in the classification module (104).

15. The device (100) according to Claim 12 or 14, **characterized in that** the classification module (104) is designed for the purpose of providing a control variable or a signal (e), which triggers the specification of the threshold value (vS1; vS2; vS(FV); vS(bO)) in the signal processing circuit (6).

16. The method (200) according to Claim 8, which furthermore comprises, for carrying out a capacitive liquid level measurement (cLLD) of a liquid (1) in a container (101), the following steps:
- providing the liquid (1) in a container (101),
- carrying out the capacitive liquid level measurement (cLLD)
- during the execution of an immersion movement of a sensor (102) into the liquid (1), or
- during the execution of an emerging movement of a sensor (102) out of the liquid,
wherein, before or during the execution of the immersion movement or the emerging movement, a sensitivity adaptation of the capacitive liquid level measurement (cLLD) is carried out on the basis of the array of discrete threshold values (vS1; vS2) and/or on the basis of the predefined threshold value function (vS(FV); vS(bO)).

## Revendications

1. Procédé (200) destiné à la classification automatisée d'un liquide (1) dans un dispositif (100) conçu pour effectuer une mesure de niveau de liquide capacitive (cLLD) du liquide (1) dans un récipient (101), le procédé (200) comprenant les étapes suivantes consistant à :
- fournir le liquide (1) dans un récipient (101),
- établir une connexion par câble (105) entre un module de classification (104) du dispositif (100) et un capteur (102) pour effectuer une mesure capacitive de ce liquide (1) en utilisant le module de classification (104)
• en effectuant un mouvement d'immersion d'un capteur (102) dans le liquide (1), ou
• en effectuant un mouvement de sortie d'un capteur (102) du liquide (1),
- dont une variation de signal d'un signal (s(t)) de la mesure capacitive étant traitée, la variation découlant du mouvement d'immersion du capteur (102) dans le liquide (1) ou du mouvement de sortie du capteur (102) du liquide (1), et une valeur seuil (vS1 ; vS2) et/ou une fonction de valeur seuil (vS(FV) ; vS(bO)) étant déterminée à partir de cette mesure, pour procéder à la classification automatisée du liquide (1) pour une mesure de niveau de liquide capacitive ultérieure (cLLD), le préréglage de la valeur seuil (vS1, vS2; vS(FV) ; vS(bO)) pour une mesure de niveau de liquide capacitive ultérieure (cLLD) étant réglé automatiquement par le module de classification (104) par le biais d'un interrupteur ou actionneur (12) associé au dispositif (100), le module de classification (104) étant raccordé du point de vue de la technique des circuits (106) au circuit de charge/de décharge (2) ou au circuit de traitement de signal (6) ou bien aux deux circuits (2) et (6) pour déclencher automatiquement, après utilisation du capteur (102) pour la mesure capacitive du liquide (1), le préréglage de la valeur seuil (vS1, vS2; vS(FV) ; vS(bO)) pour la mesure de niveau de liquide capacitive ultérieure (cLLD) via l'interrupteur ou l'actionneur (12),
**caractérisé en ce que**, dans le cadre de la mesure capacitive, plusieurs capteurs (102) effectuent les uns après les autres un mouvement d'immersion dans le récipient (101), dans lequel, lors de l'immersion d'un premier capteur (102), il est déterminé une première variation de signal ou une première valeur d'intensité et, lors de l'immersion d'un deuxième capteur (102), il est déterminé une deuxième variation de signal ou une deuxième valeur d'intensité, une moyenne étant faite à partir des deux variations de signal ou des deux valeurs d'intensité.

2. Procédé (200) selon la revendication 1, **caractérisé en ce que** l'intensité (SI) du signal (s(t)) est traitée au niveau de la variation de signal et/ou de l'amplitude de la variation de signal pour procéder à la classification automatisée du liquide (1).

3. Procédé (200) selon la revendication 1 ou 2, **caractérisé en ce que**, pour la classification automatisée du liquide (1), on effectue les étapes suivantes :
- classification (S4) du liquide (1) dans une première classe de sensibilité dans le cas où la variation du signal (s(t)) de la mesure capacitive est au-dessus d'une valeur seuil prédéfinie (vS),
- classification (S5) du liquide (1) dans une deuxième classe de sensibilité dans le cas où la variation du signal (s(t)) de la mesure capacitive est en dessous de la valeur seuil prédéfinie (vS).

4. Procédé (200) selon l'une des revendications 1, 2 ou 3, **caractérisé en ce que** la classification automatisée du liquide (1) se fait à l'aide de valeurs de consigne qui ont été déterminées dans un environnement de détermination prédéfini du dispositif (100), puis mémorisées.

5. Procédé (200) selon la revendication 4, **caractérisé en ce que** la classification automatisée du liquide (1) se fait dans un environnement de classification défini du dispositif (100), l'environnement de classification étant identique à l'environnement de détermination au moins en ce qui concerne l'une des prescriptions suivantes :
- le volume (FV) de liquide (1) dans le récipient (101),
- la surface utilisée par le liquide (1) dans le récipient (101),
- le type de capteur (102),
- le type de récipient (101),
- le type de support (103.1) pour le récipient (101),
- le type de table de travail (103.2) sur laquelle le support (103.1) est agencé.

6. Procédé (200) selon l'une des revendications 1 à 5, **caractérisé en ce qu'**on utilise comme récipient (101) un récipient d'échantillon dédié qui est rempli d'un volume connu (FV) du liquide (1), dans lequel, pour la classification automatisée du liquide (1), on réalise une procédure commandée par processeur pour déterminer de façon automatisée la sensibilité de ce liquide (1).

7. Procédé (200) selon la revendication 6, **caractérisé en ce que**, dans le cadre de cette procédure, le capteur (102) est immergé depuis une position au-dessus d'un niveau du liquide (1) dans le récipient d'échantillon dédié dans le liquide (1), dans lequel, lors de l'immersion du capteur (102), on effectue la mesure capacitive (cLLD) et dans lequel, à l'aide d'une modification de capacité qui résulte de l'immersion, soit on détermine une valeur de sensibilité pour ce liquide (1), soit on répartit le liquide (1) dans une classe de sensibilité en comparant avec les valeurs prédéterminées.

8. Procédé (200) selon l'une des revendications 1 à 5, **caractérisé en ce que**, dans le cadre de la mesure capacitive pour le liquide (1), il est déterminé
- une série de valeurs seuil discrètes (vS1 ; vS2) et/ou
- une fonction de valeur seuil (vS(FV) ; vS(bO),
la fonction de valeur seuil (vS(FV) ; vS(bO)) dépendant du volume (FV) de liquide (1) dans le récipient (101) ou de la surface humectée dans le récipient (101).

9. Procédé (200) selon l'une des revendications 1 à 8, **caractérisé en ce qu'**il est effectué dans une étape ultérieure dans le dispositif (100) une mesure de niveau de liquide capacitive (cLLD) à l'aide d'un signal (s(t) ; s1(t), s2(t)) qui est fourni par le capteur (102), dans lequel, pour cette mesure de niveau de liquide capacitive (cLLD) à l'aide de la classification effectuée au préalable, il est effectué automatiquement un réglage de la sensibilité (E1, E2) de la mesure de niveau de liquide capacitive (cLLD).

10. Dispositif (100) comprenant plusieurs capteurs réglables (102), un récipient (101) pour recevoir un liquide (1), un environnement de récipient (103) et un circuit de traitement de signal (6), dont le côté entrée (11) peut être relié du point de vue de la technique des circuits de commutation aux capteurs (102), le dispositif (100) étant conçu, en mode normal, pour procéder à l'aide des capteurs (102) à une mesure de niveau de liquide capacitive (cLLD) du liquide (1) dans le récipient (101), dans lequel
- une valeur seuil (vS1, vS2 ; vS(FV) ; vS(bO)) peut être prédéfinie pour le circuit de traitement de signal (6) pour le fonctionnement normal, **caractérisé en ce que**
- le dispositif (100) comprend un interrupteur ou un actionneur (12) ainsi qu'un module de classification (104),
i. qui peut être relié du point de vue de la technique des circuits de commutation avec un côté d'entrée (11) ou par connexion par câble (105) aux capteurs (102),
ii. qui est conçu pour effectuer à l'aide des capteurs (102) une mesure capacitive du liquide (1) dans le récipient (101), et
iii. qui est relié du point de vue de la technique des circuits (106) au circuit de charge/décharge (2) ou au circuit de traitement de signal (6) ou aux deux circuits (2) et (6), pour déclencher automatiquement, après l'utilisation des capteurs (102) pour la mesure capacitive du liquide (1), la détermination des valeurs seuil (vS1, vS2 ; vS(FV) ; vS(bO)) via l'interrupteur ou l'actionneur (12),
**caractérisé en ce que** le dispositif est configuré de sorte que, dans le cadre de la mesure capacitive, plusieurs capteurs (102) peuvent effectuer les uns après les autres un mouvement d'immersion dans le récipient (101), dans lequel, lors de l'immersion d'un premier capteur (102) il est déterminé une première variation de signal ou une première valeur d'intensité, et lors de l'immersion du deuxième capteur (102) il est déterminé une deuxième variation de signal ou une deuxième valeur d'intensité, et dans lequel il est fait une moyenne à partir des deux variations de signal ou des deux valeurs d'intensité.

11. Dispositif (100) selon la revendication 10, **caractérisé en ce que** le dispositif (100) pour la mesure capacitive du liquide (1) comprend un environnement prédéfini, dans lequel, dans l'environnement prédéfini il est prédéfini au moins l'un des aspects suivants :
- le type de récipient dédié (101),
- le volume (FV) de liquide (1) dans le récipient dédié (101),
- la surface occupée par le liquide (1) dans le récipient (101),
- le type de capteur (102),
- le type de support (103.1) pour recevoir ou pour maintenir le récipient dédié (101),
- le type de table de travail (103.2) sur laquelle est agencé le support (103.1).

12. Dispositif (100) selon la revendication 10 ou 11, **caractérisé en ce que**, dans le module de classification (104), il est mis en place une procédure, de préférence une procédure commandée par processeur, pour déterminer de façon automatisée la sensibilité et/ou la valeur seuil (vS1, vS2 ; vS(FV) ; vS(bO)) de ce liquide (1).

13. Procédé (200) selon la revendication 8, **caractérisé en ce qu'**on utilise un dispositif selon la revendication 11, 12 ou 13.

14. Dispositif (100) selon la revendication 10 ou 11, **caractérisé en ce que**, dans le module de classification (104), il est mis en place une procédure, de préférence une procédure commandée par processeur, pour le traitement automatisé d'un signal capacitif (s(t)) qui est transmis ou fourni par le capteur (102) par le côté entrée ou la connexion par câble (105).

15. Dispositif (100) selon la revendication 12 ou 14, **caractérisé en ce que** le module de classification (104) est conçu pour fournir une variable de référence ou un signal (e) qui déclenche dans le circuit de traitement de signal (6) le préréglage de la valeur seuil (vS1, vS2 ; vS(FV) ; vS(bO)).

16. Procédé (200) selon la revendication 8 comprenant en outre, pour réaliser une mesure de niveau de liquide capacitive (cLLD) d'un liquide (1) dans un récipient (101) les étapes suivantes consistant à :
- fournir le liquide (1) dans un récipient (101),
- réaliser la mesure de niveau de liquide capacitive (cLLD)
• En effectuant un mouvement d'immersion d'un capteur (102) dans le liquide (1), ou
• En effectuant un mouvement de sortie d'un capteur (102) du liquide,
dans lequel, avant ou lors du mouvement d'immersion ou du mouvement de sortie, il est réalisé une adaptation de sensibilité de la mesure de niveau de liquide capacitive (cLLD) à l'aide d'une série de valeurs seuil discrètes (vS1 ; vS2) ou à l'aide de la fonction de valeur seuil prédéterminée (vS(FV) ; vS(bO)).
